# EUROPÄISCHE PATENTSCHRIFT

(11) **EP 2 907 694 B1**
(45) Veröffentlichungstag und Bekanntmachung des Hinweises auf die Patenterteilung: **26.07.2017**
(21) Anmeldenummer: 15000466.1
(22) Anmeldetag: 17.02.2015
(51) Int. Cl.: B60N 2/30, B60N 2/50, A61G 5/10, B60N 2/16, B60N 2/18

(54) **Verstelleinrichtung für Fahrzeugsitze**
Vehicle seat adjustment device
Dispositif de réglage pour sièges de véhicule

(30) Priorität: 17.02.2014 DE 102014001984
(43) Veröffentlichungstag der Anmeldung: 19.08.2015
(73) Patentinhaber: In-Tra-Tec GmbH, 42897 Remscheid (DE)
(72) Erfinder: Gierse, Klaus, 42477 Radevormwald (DE); Gautschi, Georges, 3924 St. Niklaus (CH)
(74) Vertreter: Demski, Siegfried

(56) Entgegenhaltungen:
- US-A1- 2002 149 168
- US-A1- 2007 084 648

## Beschreibung

Die Erfindung betrifft Verstelleinrichtung für Fahrzeuge, insbesondere Elektrorollstühle oder Rehabilitationsfahrzeuge, umfassend zumindest eine Montageplatte und eine Auflageplatte mit einer Hebevorrichtung, welche zumindest zwei Scherenbeschläge umfasst, welche an der Seitenlängskante oder jeweils in einem Eckbereich der Montage- bzw. Auflageplatte angeordnet und über ein Antriebsmittel in der Höhe verstellbar sind.

Fahrzeuge unterschiedlichster Bauart sind für den Personenverkehr, als Baumaschinen und für den landwirtschaftlichen Bereich bekannt. Daneben existieren Elektrorollstühle oder Rehabilitationsfahrzeuge, die zum Teil zur Aufnahme von erheblichen Lasten vorgesehen sind. Soweit beispielsweise Baufahrzeuge oder landwirtschaftliche Fahrzeuge, wie Traktoren, in einem bergigen Gelände eingesetzt werden, sind diese mit einer Sitzeinrichtung ausgestattet, die über pneumatische Verstellzylinder in eine horizontale Position gebracht werden können. Diese Maßnahme dient zur Arbeitserleichterung.

Bei Elektrorollstühlen oder anderen Fahrzeugen, die zum Transport von Menschen mit Behinderung vorgesehen sind, kann im Einzelfall auch auf ebener Fahrstrecke die besondere Einstellung der Sitzfläche erforderlich sein. Hierbei kann es sich beispielsweise um körperliche Anomalien oder Krankheitsbilder handeln, die eine Schrägstellung der Sitzfläche oder die Einstellung eines bestimmten Neigungswinkels für die durchzuführenden Entlastungen oder Arbeiten erforderlich machen. Typische Krankheitsbilder mit z. B. einer erheblichen Dekubitusgefährdung sind Rückenmarksverletzungen wie z. B. Tetraplegie, ALS (Amyotrophe Lateralsklerose), MS (Multiple Sklerose), Myopathien, neurologische Erkrankungen und Schädel-Hirn-Traumata. Mithilfe einer Verstelleinrichtung soll für diese Personen zumindest teilweise Abhilfe geschaffen werden.

Eine Verstelleinrichtung, die für einen Elektrorollstuhl vorgesehen sein soll, muss hierbei gewisse Kriterien erfüllen. Einerseits darf die Bauhöhe ein gewisses Maß nicht überschreiten, weil sonst ein barrierefreier Zugang z. B. zum Fahrzeug nicht gegeben ist und andererseits dürfen die Elektrorollstühle eine Bauhöhe nicht überschreiten, da die Personen in der Regel zur Ausführung von Arbeiten oder ihrer privaten Tätigkeiten einen Tisch benötigen, unter den der Elektrorollstuhl verfahrbar sein muss. Somit besteht das Bedürfnis, dass die Elektrorollstühle oder Rehabilitationsfahrzeuge unterschiedliche, wechselnde Positionen einnehmen können und zudem die vorgenannten Randbedingungen erfüllen.

Aus der US-Patentanmeldung 2002/0149168 A1 ist eine Verstelleinrichtung für einen Rollstuhl bekannt, welche aus einem doppelten Scherenbeschlag besteht. Mithilfe des doppelten Scherenbeschlages wird eine hohe Sitzhöhe erzielt, wobei ein erster Scherenbeschlag unmittelbar mit einem zweiten Scherenbeschlag gekoppelt ist und die jeweils freien Enden der Scherenbeschläge mit den weiteren Einrichtungen des Rollstuhls verbunden sind.

Aus dem US-Patent 5,601,302 ist ebenfalls ein Rollstuhl mit einem Doppelscherenbeschlag bekannt, der zusätzlich durch eine abstützende Traverse in der erhöhten Position gesichert wird. Auch in diesem Fall sind die einzelnen Scherenbeschläge miteinander und die freien Enden jeweils mit den weiteren Komponenten des Rollstuhls verbunden.

Der vorliegenden Erfindung liegt die Aufgabe zugrunde, eine neuartige Verstelleinrichtung mit Hebevorrichtung für Fahrzeuge aufzuzeigen, die äußerst platzsparend aufgebaut ist und eine individuelle Verstellbarkeit gewährleistet.

Zur Lösung der Aufgabe ist vorgesehen, dass die Scherenbeschläge unabhängig voneinander höhenverstellbar sind. Weitere vorteilhafte Ausgestaltungen der Erfindung ergeben sich aus den Unteransprüchen.

Ausgehend von einer Auflageplatte, die beispielsweise mit dem Unterbau des Elektrorollstuhls verbunden ist, und einer Montageplatte, die im Wesentlichen zur Montage der Sitzfläche vorgesehen ist, wird eine Verstelleinrichtung vorgeschlagen, die sich zwischen der Montageplatte und der Auflageplatte befindet und die Möglichkeit einer individuellen Höheneinstellung bietet.

Hierzu wird vorgeschlagen, die Hebevorrichtung mit zwei, drei oder vier Scherenbeschlägen auszurüsten. Zwei Scherenbeschläge werden an den Längsseiten der Montageplatte bzw. Auflageplatte befestigt, sodass die Auflageplatte bei gleichzeitiger Beaufschlagung beider Scherenbeschläge in der Höhe variabel eingestellt werden kann. Soweit nur ein Scherenbeschlag beaufschlagt wird, kann eine seitliche Neigung nach links oder rechts erfolgen. Alternativ, soweit vier Scherenbeschläge verwendet werden, können sich diese in einem Eckbereich der Montage- und Auflageplatte befinden, sodass weitere Möglichkeiten der Ausrichtung der Auflageplatte gegeben sind. Soweit die hinteren Scherenbeschläge der Montageplatte angehoben werden, erfolgt eine Neigung (Kantelung) der Auflageplatte nach vorne. Soweit die Scherenbeschläge vorne angehoben werden, erfolgt eine Neigung (Kantelung) nach hinten. Ferner besteht die Möglichkeit, die beiden Scherenbeschläge der linken oder rechten Seite anzuheben, sodass eine Neigung der Sitzfläche nach rechts bzw. links erfolgt. Des Weiteren besteht die Möglichkeit, dass eine Neigung über die Diagonalachse der Auflageplatte eingestellt werden kann. Hierzu besteht die Notwendigkeit, beispielsweise den vorderen, rechten Scherenbeschlag annähernd in der unteren Position zu belassen, während demgegenüber der hintere, linke Scherenbeschlag nahezu vollständig hochgefahren wird, und die beiden übrigen Scherenbeschläge hinten rechts und vorne links nur teilweise hochgefahren werden. Alternativ kann eine Kantelung gegenüber der zweiten Diagonalachse in ähnlicher Weise erfolgen. Soweit lediglich eine Höhenverstellung gewünscht wird, werden sämtliche Scherenbeschläge in eine annähernd gleiche Höhe verfahren. Die vorgenannten Möglichkeiten können ebenso mit drei Scherenbeschlägen vorgenommen werden.

Um eine Neigungseinstellung bei der Sitzfläche vorzusehen, sind auch medizinische Aspekte entscheidend. Typische Krankheitsbilder sind hier Muskeldystrophie, CP (Cerebralparese), Spina Bifida. Bei einer 20° Seitenkantelung wird die Wirbelsäule und die Sitzbeine bei einer Skoliose (S-förmige, seitliche Krümmung der Wirbelsäule) entlastet. Die Sitzfläche muss hierbei nach Bedarf zur Seite geneigt werden, bis der Schultergürtel waagerecht ausgerichtet ist. Hierdurch wird eine natürliche Kopfhaltung und Wahrnehmung ermöglicht. Die Betroffenen können hierbei zumeist selbst den Zeitraum der Lageveränderung bestimmen und sich somit gezielt entlasten. Bei einer 40 Grad-Rückkantelung erfolgt eine Druckentlastung der dekubitusgefährdeten Sitzbeine (Dekubitusprophylaxe) um ca. 70 bis 80 % und wird deshalb auch als medizinische Lagerung bezeichnet. Ein Blickkontakt ist bei dieser Lage nur noch eingeschränkt möglich. Bei der Nutzung auf einem Rollstuhl ermöglicht die zusätzliche Verschiebung der Sitzfläche nach vorne ferner einen Schwerpunktausgleich, der eine durch Rückkantelung entstehende Kippgefahr nach hinten ausschließt. Durch eine 20° bis 30° Rückkantelung wird hierbei eine angenehme Ruhe- oder Relax-Position für die betroffenen Personen ermöglicht. Bei einer 20° bis 25° Rückkantelung und 15° bis 20° Seitenkantelung (Diagonalkantelung) ergibt sich eine auf 90 % erhöhte Druckentlastung (Dekubitusprophylaxe) für das rechte oder linke Sitzbein. Ein Blickkontakt zur direkten Umgebung des Sitzes ist hierbei uneingeschränkt möglich.

Patienten mit den typischen Krankheitsbildern einer erheblichen Dekubitusgefährdung durch Rückenmarkverletzungen, wie ALS, MS, Myopathien, neurologische Erkrankungen und Apoplex kann hierdurch geholfen werden.

Durch die integrative Indikation wird beispielsweise erreicht, dass bei einem 20 cm Hub der Sitzfläche ein leichtes Erreichen von höher gelegenen Gegenständen und einfachem Augen- / Blickkontakt ermöglicht wird. Bei einem 20 cm Hub der Sitzfläche mit einer gleichzeitigen oder anschließenden Kantelung nach vorne um bis zu 40° wird das aktive Aufstehen von Menschen mit Bewegungseinschränkungen oder verringerter Muskelkraft unterstützt. Bei der Nutzung auf einem Rollstuhl ermöglicht die zusätzliche Verschiebung der Sitzfläche nach vorne eine freie Standfläche, ohne Einschränkung durch die vorderen Rollstuhlräder.

Bei einer 20° Seitenkantelung mit variablem Hub besteht die Möglichkeit, einen einfachen, seitlich rutschenden Transfer zum Beispiel auf Toiletten, Betten, Stühlen oder Pflegeliegen vorzunehmen. Zusätzlich kann durch ein Rutschbrett die Gleitfunktion unterstützt werden. Ein eigenständiger oder leicht unterstützter Transfer von Menschen, die durch erhebliche Bewegungseinschränkungen an einen Elektrorollstuhl gebunden sind, ist wesentlich für einen selbstbestimmenden Alltag.

Die erfindungsgemäße Verstelleinrichtung ermöglicht eine Vielzahl von Positionseinstellungen der Auflageplatte, welche gleichbedeutend mit der Sitzneigung ist. Somit kann in vorteilhafter Weise die gewünschte Position eingestellt werden, die eine Person mit Behinderung benötigt, um beispielsweise schmerzfrei eine sitzende Haltung einzunehmen und die gewünschten Arbeiten zu verrichten. Bei einer Neigung der Auflageplatte nach vorne beispielsweise wird das Auf- und Absteigen erleichtert, während bei einer Neigung nach hinten beispielsweise eine Ruheposition eingestellt werden kann. Durch die mögliche Höhenverstellung der Auflageplatte bzw. Sitzfläche kann hierbei jederzeit eine Adaption an vorhandene Tischhöhen erfolgen, sodass die Person mit dem vorderen Teil des Fahrzeuges unter einen vorhandenen Tisch fahren kann. Der besondere Vorteil der Verstelleinrichtung besteht hierbei durch die Verwendung der Scherenbeschläge darin, dass die gesamte Ausführung in der Höhe äußerst kompakt aufgebaut ist und somit eine nachträgliche Montage bei vorhandenen Fahrzeugen möglich ist. Die Aufbauhöhe überschreitet eine Höhe von 12 cm nicht und kann somit unproblematisch in ein vorhandenes Fahrzeug oder in einem Neufahrzeug integriert werden. Soweit eine Montageplatte mit einem unteren kastenförmigen Unterbau zum Einsatz kommt, können die Getriebekomponenten der Verstelleinrichtung in dem kastenförmigen Unterbau integriert werden und damit die Montagehöhe auf 8 cm reduziert werden. Die Neigungseinstellung der Auflageplatte wird hierbei dadurch vorteilhaft unterstützt, dass die Scherenbeschläge unabhängig voneinander höhenverstellbar sind.

In weiterer Ausgestaltung der Erfindung ist vorgesehen, dass jeder Scherenbeschlag aus einer Doppelschere besteht, sodass eine ausreichende Stabilität der Auflageplatte erreicht wird und darüber hinaus eine hohe Traglast gewährleistet ist. Die Scherenelemente eines Scherenbeschlages sind hierbei jeweils versetzt in einer Ebene in der Art angeordnet, dass sich die einzelnen Scherenelemente nicht berühren. Somit kann eine Verklemmung ausgeschlossen und eine unabhängige Höhenverstellung gewährleistet werden. Hierbei besteht jeder Scherenbeschlag aus vier jeweils paarig angeordneten Scherenelementen, wobei jeweils ein erstes unteres und ein zweites oberes Scherenelement vorhanden sind. Die unteren und oberen Scherenelemente mit gleicher Neigungsrichtung sind hierbei in einem gemeinsamen Gelenkpunkt mit einer Drehachse verbunden. Über die Drehachse wird hierbei die Gelenkigkeit der Scherenelemente sichergestellt, sodass die oberen und unteren Scherenelemente gegenüber der Ebene der Drehachse verschwenkt werden können. Die Länge der einzelnen Scherenelemente bestimmt hierbei den maximalen Hubweg. Je nachdem, wie viele Scherenelemente verwendet werden, ist die Länge der einzelnen Scherenelemente aufeinander abzustimmen oder deren Abstand zu vergrößern, weil sonst die Gefahr eines Verklemmens der einzelnen Scherenelemente besteht. Alternativ können die Scherenbeschläge seitlich versetzt werden. Bei zwei Scherenbeschlägen an den Längskanten der Montageplatte steht ausreichend Platz zur Verfügung. Soweit aber vier Scherenbeschläge eingesetzt werden, ist die Länge der einzelnen Scherenelemente so zu bemessen, dass sich die Scherenbeschläge in einer eingefahrenen Position der Scherenbeschläge nicht berühren. Aufgrund der jeweils paarig angeordneten Scherenelemente, welche über eine Welle miteinander drehfest gelagert sind, ist sowohl ein Anheben der Montageplatte als auch eine Neigungseinstellung möglich. Beim Anheben verbleiben die mittleren Drehachsen eines jeden Scherenbeschlages in einer waagerechten Position, wobei sich beim Hochfahren der Scherenbeschläge die Drehachsen aneinander annähern und beim Herunterfahren voneinander entfernen. Soweit eine Neigung eingestellt wird, verbleiben die angehobenen Achsen der beaufschlagten Scherenbeschläge ebenfalls in einer waagerechten Position, während gleichzeitig sichergestellt ist, dass die nicht beaufschlagten Scherenbeschläge eine Schwenkbewegung durch die oberen Scherenelemente ermöglichen.

Zur Montage der Scherenbeschläge ist in weiterer Ausgestaltung der Erfindung vorgesehen, dass jeder Scherenbeschlag ein erstes Scherenelement aufweist, welches über einen ersten Anlenkpunkt mit einer Konsole der Montageplatte oder einem kastenförmigen Unterbau und über einen zweiten mittleren Anlenkpunkt mit einer Drehachse verbunden Ist, während das zweite Scherenelement über einen ersten Anlenkpunkt mit der Auflageplatte und dem zweiten mittleren Anlenkpunkt mit der Drehachse des ersten Scherenelementes verbunden ist. Bei dieser Ausgestaltung werden jeweils die freien Enden eines Scherenbeschlages mit der Montage- bzw. Auflageplatte über einen Anlenkpunkt verbunden. Die im mittleren Bereich angeordneten Drehachsen dienen hierbei zur Lagerung von jeweils zwei unteren und zwei oberen Scherenelementen, sodass diese einen gemeinsamen Schwenkpunkt aufweisen und eine synchrone Bewegung durch die Gewindespindel ausführen können.

In Ausgestaltung der Erfindung ist hierbei vorgesehen, dass die Drehachsen eines Scherenbeschlages jeweils einen Spindelhalter aufweisen, in welchem eine Gewindespindel eingedreht ist, wobei die Gewindespindel einenends ein rechtsdrehendes Gewinde und anderenends ein linksdrehendes Gewinde aufweist. Wird die Gewindespindel gedreht, so werden die Scherenelemente eines Scherenbeschlages im mittleren Bereich aufeinander zu- oder voneinander wegbewegt. Hierdurch erfolgt die Höheneinstellung des Scherenbeschlages, weil die freien Enden der Scherenelemente mit der Auflageplatte bzw. Montageplatte verbunden sind und verschwenkt werden. Zur Höhenverstellung ist vorgesehen, dass die Gewindespindeln der Scherenbeschläge durch jeweils ein Antriebsmittel antreibbar sind, wobei es sich beispielsweise um einen Elektromotor oder einen hydraulischen oder pneumatischen Motor handeln kann, welcher unmittelbar die Gewindespindel antreibt oder mittelbar über einen Zahnriemen oder eine flexible Welle. Soweit die Motoren direkt die Spindel antreiben, erfolgt die Anordnung in Axialrichtung der Spindel, während bei einer seitlichen Anordnung der Motoren durch die Zuhilfenahme eines Zahnriemens oder über ein Motorradritzel und ein Ritzel auf der Spindel die Verdrehung der Spindel erfolgt. Die eingesetzten Ritzel sind auf den jeweiligen Spindeln drehfest in einer Nut geführt, sodass die Position der Ritzel gegenüber den Antriebsmotoren beibehalten wird, aber die Spindel innerhalb des Ritzels aufgrund der Rotation verlagert wird. Bei dieser Bauvariante kann der Zwischenraum zwischen den Scherenbeschlägen für die Motoren verwendet werden und es erfolgt keine axiale Verlängerung der Spindelenden, welche möglicherweise hinderlich wäre. Ein Doppelscherenbeschlag weist hierbei jeweils eine Gewindespindel auf, sodass auch jede Gewindespindel mit einem eigenen Antriebsmotor versehen wird, um die Unabhängigkeit der einzelnen Scherenbeschläge zu gewährleisten. Durch den Einsatz einer flexiblen Welle besteht die Möglichkeit, den Antriebsmotor zwischen den Scherenbeschlägen unterhalb der Auflageplatte anzuordnen, wobei die flexible Welle von dem Antriebsmotor angetrieben das Drehmoment auf die Gewindespindel direkt oder über eine Getriebeuntersetzung überträgt.

Vorzugsweise wird als Antriebsmittel ein Elektromotor eingesetzt, welcher mit einem Zahnrad unmittelbar über eine korrespondierende Verzahnung auf dem Ende der Gewindespindel gelagert ist. Das Antriebsmittel in Form des Elektromotors ist hierbei über eine Schlittenführung schwenkbeweglich gelagert, um der Höhenbewegung der Gewindespindel zu folgen, wenn die Scherenbeschläge ausgefahren werden. Die Schlittenführung besteht in diesem Fall aus beispielsweise einer Trapezschiene, welche unmittelbar mit der Montageplatte verschraubt ist. Auf der Trapezschiene ist ein Gleitschuh angeordnet, an dem wiederum der Elektromotor schwenkbeweglich gelagert ist. Somit erfolgt eine Abstützung des Elektromotors durch das Zahnrad, welches auf die korrespondierende Verzahnung der Gewindespindel aufgeschoben ist und den Gleitschuh. Bei diesem Direktantrieb der Gewindespindel besteht der Vorteil, dass der Motor seine Position zur Gewindespindel beibehält. Der Motor muss nicht über Keilbahnen auf der Spindel gleiten, wie bei einem Zahnriemenantrieb. Darüber hinaus liegt eine kompakte Bauform vor, die stirnseitig an der Montageplatte angeordnet werden kann. Alternativ kommt die Verbindung über eine flexible Welle infrage, sodass der Elektromotor frei angeordnet werden kann, beispielsweise parallel zur Gewindespindel. Der Motor kann in diesem Fall fest montiert werden, die flexible Welle gleicht die Bewegung der Gewindespindel aus.

Die vorgesehene Montageplatte ist hierbei mit dem Unterbau eines Fahrzeuges verbunden, während demgegenüber die Auflageplatte zur Montage der Sitzfläche mit oder ohne Rückenlehne vorgesehen ist oder die Sitzfläche bildet. Zwischen Montageplatte und Auflageplatte befinden sich die Scherenbeschläge.

In besonderer Ausgestaltung der Erfindung ist vorgesehen, dass der erste Anlenkpunkt der zweiten oberen Scherenelemente aus einer mit der Auflageplatte verbundenen, drehbaren Hülse besteht, welche auf einer Drehachse angeordnet ist, die die beiden oberen Anlenkpunkte der benachbarten Scherenelemente gleicher Neigungsrichtung verbindet, wobei mindestens eine Hülse eines Scherenbeschlags zusätzlich verschieblich auf der Drehachse gelagert ist.

Die oberen Anlenkpunkte mit der Drehachse werden in diesem Fall dazu verwendet, eine Hülse aufzunehmen, welche verschwenkbar und verschiebbar gelagert ist, wobei die Hülse über eine radiale Verlängerung mit einer Konsole der Montageplatte verbunden ist. Die Konsole ermöglicht ein Verschwenken der Verlängerung, sodass die Hülse in Abhängigkeit der Position des Scherenbeschlages zwischen den beiden Anlenkpunkten, welche quasi eine Anschlagfläche bilden, bewegbar ist. Durch die Hülse wird hierbei sichergestellt, dass bei einer Verkantung der Auflageplatte, beispielsweise bei einer seitlichen Neigung nach links oder rechts, keine Spannung innerhalb der Scherenbeschläge auftreten und somit keine Blockierung erfolgt. Es reicht in diesem Fall, wenn die links- oder rechtsseitigen Scherenbeschläge einer Längsseite mit einer axial beweglichen Hülse ausgestattet sind, während demgegenüber die gegenüberliegenden Beschläge eine Hülse aufweisen, die auf der Drehachse nicht verschieblich gelagert ist. Hierdurch wird bei jeder Seitenneigung erreicht, dass eine diagonale Verschiebung zu den Scherenbeschlägen ausgeglichen werden kann und das auf der Auflageplatte ruhende Gesamtgewicht sicher und stabil gehalten wird. Dadurch, dass die jeweils gegenüberliegenden Scherenbeschläge entlang einer Längskante keine axial verschiebliche Hülse aufweisen, wird ein unabsichtliches seitliches Verschieben der Auflageplatte verhindert.

In weiterer Ausgestaltung der Erfindung ist vorgesehen, dass der erste Anlenkpunkt der ersten Scherenelemente paarweise drehfest mit einer Drehachse verbunden ist, welche in einem unteren Rahmenteil gelagert ist, wobei über Verzahnungselemente, beispielsweise Antriebsritzel, eine Kopplung zwischen den benachbarten Drehachsen jeweils zweier unterer Scherenelemente erfolgt. Die Verzahnungselemente dienen hierbei zur Synchronisierung der beiden Drehachsen, welche sich gegenläufig bewegen. Jeweils eine Drehachse ist mit zwei unteren Scherenelementen, und zwar nach links beziehungsweise rechts beweglichen Scherenelementen verbunden, sodass diese bei Betätigung der Gewindespindel jeweils seitlich nach links und rechts verschwenkt werden können, beziehungsweise bei einem umgedrehten Drehsinn der Gewindespindel in eine aufgerichtete Stellung verbracht werden. Die Verzahnung sorgt für eine Kopplung der unteren Scherenelemente, wodurch ein Vor- oder Zurückschwenken der beiden Scherenelemente verhindert und damit eine stabile kippfreie Aufrichtung der Auflageplatte ermöglicht wird.

Von besonderem Vorteil ist bei der erfindungsgemäßen Ausgestaltung der Verstelleinrichtung die geringe Bauhöhe aufgrund der verwendeten Scherenelemente eines Scherenbeschlages, welche nebeneinanderliegend angeordnet sind, sodass eine Bauhöhe von 12 cm nicht überschritten wird, wobei ein Teil der Verstelleinrichtung in dem kastenförmigen Unterbau oder in dem Rahmen des Fahrzeuges oder Elektrorollstuhls integriert werden kann.

In weiterer besonderer Ausgestaltung der Erfindung ist vorgesehen, dass die Montageplatte mit zumindest einer Laufschiene verbunden ist und die Laufschiene in einer Linearantriebseinheit gelagert ist, wobei die Linearantriebseinheit mit dem Fahrzeugunterbau fest verbunden ist, und wobei die Laufschiene über eine Zahnstange, einen Riemen, eine Spindel oder einen Linearantrieb gegenüber dem Fahrzeugunterbau bewegbar Ist. Die Laufschiene dient hierbei dazu, eine Verschiebung der Montageplatte gegenüber dem Fahrzeugunterbau zu bewirken. Somit kann die Sitzposition gegenüber der Räderposition eingestellt werden. Durch die Laufschiene besteht die Möglichkeit, die Auflageplatte mit montierter Sitzfläche und einer Person, die sich in dem Sitz befindet, zu verlagern, wodurch eine maximale Kippsicherheit des Fahrzeuges gewährleistet wird. Hierbei kommt es insbesondere auf die Verlagerung des Schwerpunktes bei einer Neigung der Auflageplatte nach vorne oder hinten an. Darüber hinaus kann durch eine Laufschiene ein besseres Aufrichten der Person ermöglicht werden, wenn der auf der Auflageplatte befindliche Sitz nach vorne verlagert wird und somit das Aufsetzen der Füße frei von Behinderungen, beispielsweise der Vorderräder, möglich ist.

Um die Bewegung der Scherenelemente zu begrenzen, ist in einfacher Ausgestaltung zumindest ein Endschalter vorgesehen, welcher immer dann aktiviert wird, wenn die Scherenelemente in die untere oder obere Position verfahren werden, sodass eine Abschaltung des Antriebsmotors in einer Drehrichtung erfolgt. Eine genauere Erfassung der Bewegung der Scherenelemente kann über ein Zahnelement und einen Winkelgeber erfolgen. Das Zahnelement kämmt hierbei mit dem Verzahnungselement des ersten Anlenkpunktes, sodass der Winkelgeber eine Drehbewegung erfährt und anhand der Drehbewegung die Höhenposition der einzelnen Scherenelemente ermittelt werden kann. Durch Berücksichtigung oberer und unterer Grenzwerte kann somit mithilfe einer Steuerungseinheit die jeweilige Höhenposition der Scherenelemente erfasst und ggf. korrigiert werden. Alternativ besteht die Möglichkeit, dass die Bewegung der unteren Scherenelemente und damit auch die Bewegung der oberen Scherenelemente aufgrund der vorhandenen Kopplung über die Drehung der Gewindespindel mithilfe eines Drehzahlgebers überwacht wird. Dieser Drehzahlgeber kann sich entweder endseitig auf der Gewindespindel befinden oder an dem Antriebsmotor angeflanscht sein, sodass eine Zählung der Umdrehungen und Erfassung eines Winkelwertes möglich ist. Über die einzelnen Umdrehungen und den Winkelwert kann hierbei eine exakte Positionsbestimmung in der Höhe vorgenommen werden, sodass in diesem speziellen Fall über die Steuerungseinheit Korrekturen erfolgen können. Als Drehzahlgeber kommen hierbei sowohl Inkremental- als auch Dekrementalgeber infrage.

In weiterer Ausgestaltung der Erfindung ist vorgesehen, dass die Montageplatte mit zumindest einem Gummipuffer, vorzugsweise vier Gummipuffern ausgestattet ist, auf welche die Auflageplatte in der unteren Position zu liegen kommt. Die in der Höhe verfahrbare Auflageplatte mit weiteren Aufbauten, beispielsweise einer Sitzfläche, wird in den verschiedenen Positionen sicher durch die Scherenelemente gehalten. In der untersten Position kann ein eventuell auftretendes Spiel dadurch ausgeglichen werden, dass die Auflageplatte so weit nach unten gefahren wird, bis die Auflageplatte auf den Gummipuffern zu liegen kommt. Hierdurch kann eine Verspannung zwischen Montageplatte und Auflageplatte erfolgen, sodass eine ausreichende Fixierung in der unteren Position möglich ist. Darüber hinaus wird beim Hochfahren der Auflageplatte sichergestellt, dass diese gleichmäßig aus der unteren Position hochgefahren werden kann, wobei durch die Gummipuffer ein unterstützender Druck nach oben zum Hochfahren vorliegt.

In besonderer Ausgestaltung der Erfindung ist vorgesehen, dass die Montageplatte und die Auflageplatte jeweils mit einem Gyrosensor bestückt sind, welche mit einer Steuerungseinheit der Antriebsmittel gekoppelt sind. Gyrosensoren werden dazu verwendet, eine exakte horizontale Position zu ermitteln, wobei in diesem Fall sowohl die Position der Montageplatte einerseits, welche mit dem Fahrzeugunterbau verbunden ist, und der Auflageplatte andererseits, welche den Sitz trägt, die Möglichkeit bietet, beispielsweise bei einem unebenen Gelände durch Nachstellen der Scherenelemente den einmal eingestellten Winkel der Auflageplatte beizubehalten. Mithilfe der Gyrosensoren und der Steuerungseinheit kann somit bei unwirksamem Gelände die Auflageplatte immer in der gleichen Neigung gehalten werden, wodurch die einmal eingestellte und gewünschte Sitzposition beibehalten wird. Die Signale der beiden Gyrosensoren werden somit dazu verwendet, eine Position der Auflageplatte gegenüber der Montageplatte zu ermitteln und im Falle einer bestimmten Neigungsposition diese auch bei einer Fahrt des Rollstuhls beizubehalten. Das bedeutet, wenn sich der Rollstuhl auf unebenem Gelände bewegt, wird die Auflageplatte mit Sitz automatisch nachgeführt.

Der besondere Vorteil der vorliegenden Erfindung besteht darin, dass mithilfe von zumindest zwei Scherenbeschlägen eine individuelle Einstellung der Auflageplatte für eine Sitzfläche ermöglicht wird. Jeder einzelne Scherenbeschlag mit insgesamt vier unteren und vier oberen Scherenelementen weist hierbei eine äußerst hohe Stabilität auf, sodass auch große Lasten in der Höhe verfahren werden können, beispielsweise schwergewichtige Personen. Darüber hinaus kann mithilfe von vier Scherenbeschlägen eine individuelle Einstellung der Sitzneigung erreicht werden, und zwar mit einer vorderen oder rückwärtigen Kantelung der Sitzfläche beziehungsweise einer rechts oder linksseitigen Kantelung. Darüber hinaus besteht mit drei oder vier Scherenbeschlägen die Möglichkeit, eine diagonale Verkantung der Auflageplatte vorzunehmen, sodass eine Vielzahl von Positionen eingestellt werden kann, die dem jeweiligen Benutzer des Fahrzeuges zu Gute kommen. Besonders hervorzuheben ist die flachbauende Ausführung, welche mithilfe der Scherenbeschläge erzielt werden kann, um eine Nachrüstung von vorhandenen Fahrzeugen zu ermöglichen. Durch eine besonders optimierte Steuerelektronik und zumindest einem, vorzugsweise mehreren Lagesensoren, kann die Position der Sitzfläche automatisch erfasst und in einer vorgegebenen Position gehalten werden, wenn das Fahrzeug beispielsweise auf einem abschüssigen Gelände bewegt wird, wobei unabhängig von einem zu befahrenden Gelände die Sitzfläche in der vorgewählten Position durch Verstellen der Scherenbeschläge beibehalten wird. Die Antriebe der Scherenbeschläge gleichen hierbei die Geiändeunebenheiten, insbesondere bei stark abfallendem Gelände, automatisch in den ihnen zur Verfügung stehenden Grenzen aus.

Die Erfindung wird im Weiteren anhand der Zeichnungsfiguren nochmals erläutert.

Es zeigt
- Fig. 1: in einer perspektivischen Ansicht ein Fahrzeug mit Verstelleinrichtung für einen vorhandenen Sitz,
- Fig. 2: in einer Seitenansicht das aus Figur 1 bekannte Fahrzeug,
- Fig. 3: in einer Seitenansicht das Fahrzeug gemäß Figur 1 mit einer nach vorne geschobenen Sitzfläche,
- Fig. 4: in einer perspektivischen Ansicht das Fahrzeug mit einer nach hinten gekippten Sitzfläche,
- Fig. 5: in einer Seitenansicht die Position der Sitzfläche gemäß Figur 4,
- Fig. 6: in einer weiteren Seitenansicht das Fahrzeug gemäß Figur 4, wobei diese Sitzfläche zusätzlich nach vorne verschoben ist,
- Fig. 7: in einer vorderen- und rückwärtigen Ansicht das Fahrzeug gemäß Figur 4,
- Fig. 8: in einer perspektivischen Ansicht das Fahrzeug mit einer in Fahrzeugrichtung diagonal nach vorne links geneigten Sitzanordnung,
- Fig. 9: in einer weiteren perspektivischen Ansicht das Fahrzeug mit einer geneigten Sitzfläche gemäß Figur 8,
- Fig. 10: in einer vorderen und rückwärtigen Ansicht das Fahrzeug mit einer nach links geneigten Sitzfläche gemäß Figur 8,
- Fig. 11: in einer perspektivischen Ansicht das Fahrzeug mit einer angehobenen Sitzfläche,
- Fig. 12: in einer Seitenansicht das Fahrzeug mit angehobener Sitzfläche gemäß Figur 11,
- Fig. 13: in einer Seitenansicht die Hebevorrichtung mit Montageplatte und Auflageplatte,
- Fig. 14: die Hebevorrichtung in einer angehobenen Position der Auflageplatte gemäß Figur 13,
- Fig. 15: in einer Seitenansicht die Hebevorrichtung mit einer gekippten Auflageplatte,
- Fig. 16: in einer perspektivischen Unteransicht die Verstelleinrichtung mit einer Seitenneigung von ca. 15 Grad,
- Fig. 17: in einer weiteren perspektivischen Unteransicht die Verstelleinrichtung mit Hebevorrichtung in einer Vor-/Rückkantelung und in einer Teilansicht die Verbindung zwischen Spindel und Antriebseinheit,
- Fig. 18: in einer perspektivischen Unteransicht die Verstelleinrichtung mit Hebevorrichtung mit einer Sitzneigung von ca. 15 Grad sowie in zwei Detailansichten den unteren Anlenkpunkt des Scherenbeschlages in einem kastenförmigen Unterbau und die Antriebseinheit für die Gewindespindel mit einer Verschiebung der oberen Auflageplatte bei einer Seitenneigung,
- Fig. 19: in einer rückwärtigen Ansicht die Verstelleinrichtung mit Hebevorrichtung mit einer Sitzneigung von ca. 15 Grad und den Antriebseinheiten für die Gewindespindel,
- Fig. 20: in einer perspektivischen rückwärtigen Ansicht nochmals die Verstelleinrichtung mit Hebevorrichtung in einer geneigten Position mit Antriebseinheit,
- Fig. 21: in einer perspektivischen Teilansicht ein alternatives Antriebskonzept für die Gewindespindel mithilfe eines angeflanschten Elektromotors,
- Fig. 22: in einer perspektivischen Teilansicht das Antriebskonzept gemäß Figur 21 aus einer weiteren Blickrichtung,
- Fig. 23: in einer perspektivischen Teilansicht ein weiteres Antriebskonzept mithilfe eines Elektromotors und einer flexiblen Welle,
- Fig. 24: in einer perspektivischen Teilansicht die Verstellmöglichkeit der Auflageplatte mithilfe eines Linearantriebs,
- Fig. 25: in einer perspektivischen Teilansicht die Verwendung zweier Gyrosensoren mit Steuerungseinrichtung und
- Fig. 26: in einer perspektivischen Unteransicht einen Winkelgeber.

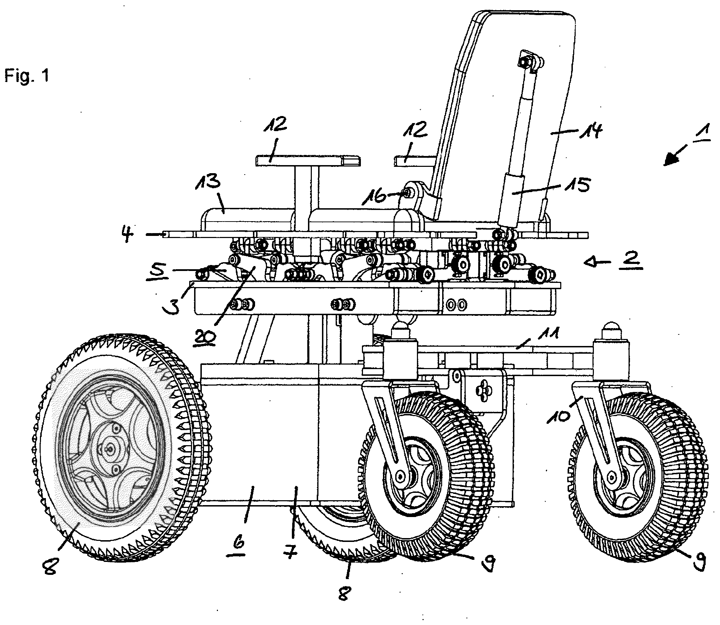

Figur 1 zeigt in einer perspektivischen Ansicht ein Fahrzeug 1 mit einer Verstelleinrichtung 2, wobei es sich in diesem Fall um beispielsweise einen Elektrorollstuhl in einer sehr stabilen Ausführung handelt. Die Verstelleinrichtung 2 besteht aus einer Montageplatte 3 und einer Auflageplatte 4, zwischen denen die Hebevorrichtung 5 angeordnet ist. Unterhalb der Montageplatte 3 befindet sich der Fahrzeugunterbau 6, welcher in diesem Fall aus einem kastenförmigen Gehäuse 7 zur Aufnahme der Elektronik und Batterien besteht. An dem Gehäuse 7 sind zwei große Antriebsräder 8 über eine Welle mit Motoren befestigt. Die Antriebsräder 8 sind in diesem Fall nicht lenkbar ausgestaltet, es erfolgt aber eine indirekte Lenkung über die beiden unabhängigen Motoren, die mit unterschiedlichen Drehzahlen angetrieben werden können. Zwei weitere, kleinere Räder 9 sind in einer gabelförmigen Aufnahme 10 mithilfe einer Drehachse gelagert, wobei die beiden Räder 9 über eine Pendelachse 11 miteinander verbunden sind und die Pendelachse 11 mit dem kastenförmigen Gehäuse 7 verschraubt ist. Das gezeigte Fahrzeug 1 wird somit durch die Antriebsräder 8 gelenkt, wobei die hierzu erforderliche Bedienung beispielsweise in den Armauflagen 12 integriert sein kann.

Auf der Auflageplatte 4 befindet sich eine Sitzfläche 13 und eine Rückenlehne 14, wobei die Rückenlehne 14 über eine Verstelleinheit 15 in der Neigung verstellt werden kann. Die Rückenlehne 14 ist zu diesem Zweck über einen Anlenkpunkt 16 schwenkbar gelagert. Zu beiden Seiten der Sitzfläche 13 befinden sich die Armauflagen 12. Die stabile Ausführung des Fahrzeuges 1 lässt hierbei bereits erkennen, dass diese Art von Fahrzeugen geländegängig sind und darüber hinaus für schwergewichtige Personen geeignet sind. Zwischen der Montageplatte 3 und der Auflageplatte 4 befindet sich die Hebevorrichtung 5, die im gezeigten Ausführungsbeispiel aus vier in den Eckbereichen angeordneten Scherenbeschlägen 20 besteht. Der Aufbau der Scherenbeschläge 20 wird aus den nachfolgenden Figuren ersichtlich.

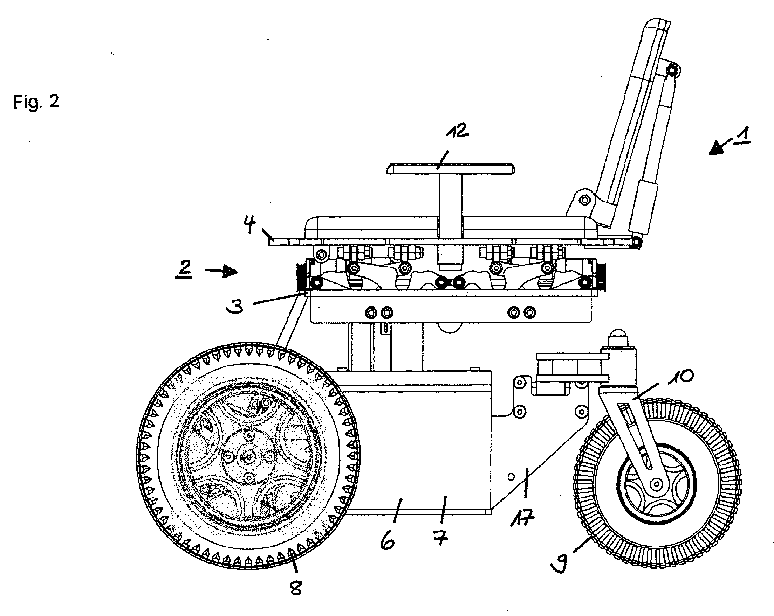

Figur 2 zeigt in einer Seitenansicht das aus Figur 1 bekannte Fahrzeug 1 mit der Verstelleinrichtung 2, welche zwischen der Montageplatte 3 und der Auflageplatte 4 angeordnet ist. Aus dieser Ansicht wird deutlich, dass die Antriebsräder 8 jeweils über einen Motor angetrieben werden, der mit dem Gehäuse 7 verbunden sind. Die weiteren, hinteren Räder 9 sind über eine Pendelachse 11 an einer an dem Gehäuse 7 angebauten Konsole 17 befestigt.

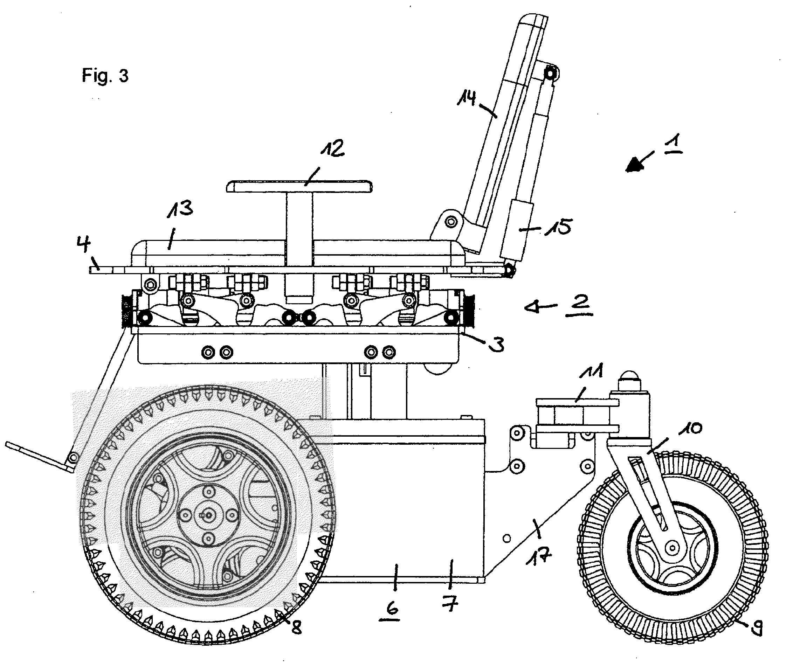

Figur 3 zeigt in einer Seitenansicht das Fahrzeug 1 gemäß Figur 1, wobei gegenüber der Figur 2 die Sitzfläche 13 mit Rückenlehne 14 zusätzlich in Richtung der vorderen Antriebsräder 8 nach vorne verschoben ist. Die Einstellung der Sitzposition erfolgt in diesem Fall beispielsweise über einen Linearantrieb, der sich unterhalb der Montageplatte 3 befindet.

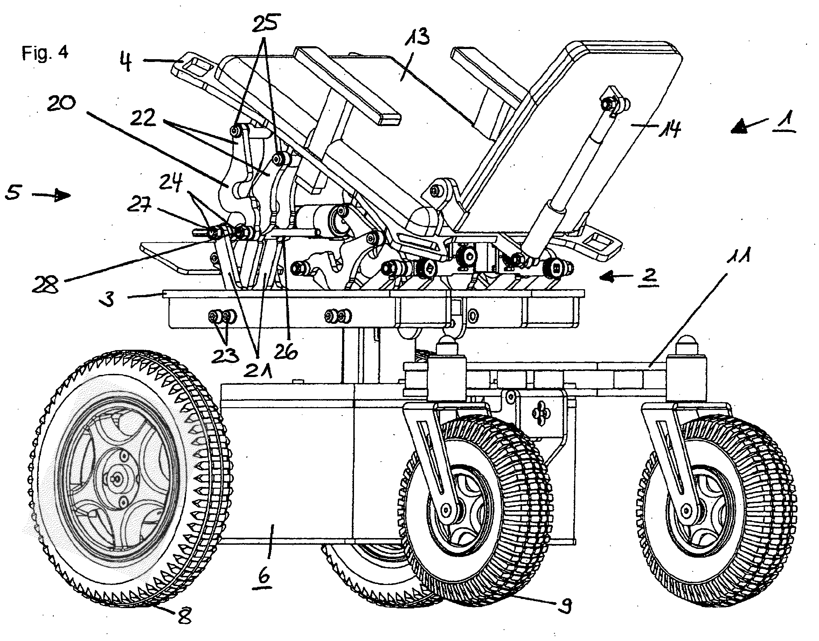

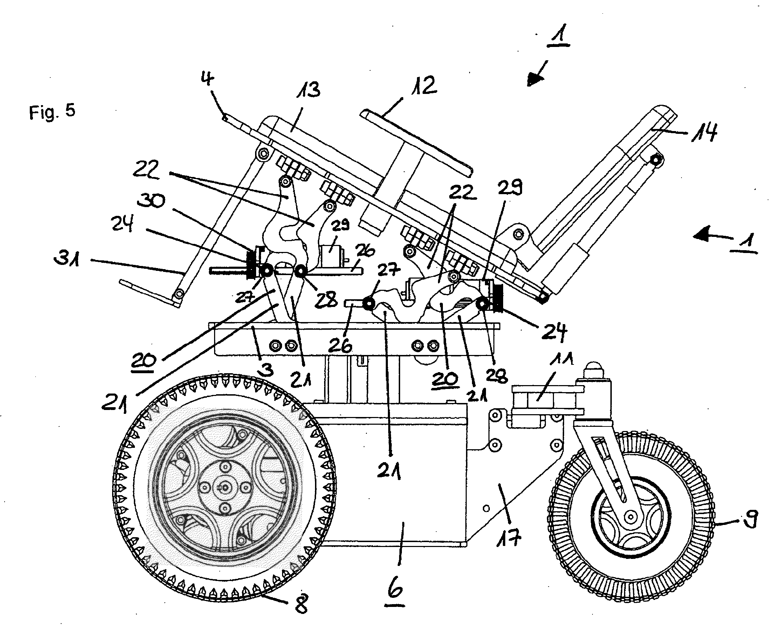

Figur 4 zeigt in einer perspektivischen rückwärtigen Ansicht das Fahrzeug 1 gemäß Figur 1 mit dem unteren Fahrzeugunterbau 6 und der Sitzfläche 13 mit Rückenlehne 14, wobei die Auflageplatte 4 gegenüber der Montageplatte 3 im vorderen Bereich mithilfe der Hebevorrichtung 5 angehoben wurde. Die Hebevorrichtung 5 besteht aus insgesamt vier Scherenbeschlägen 20, die jeweils aus vier unteren doppelpaarigen Scherenelementen 21 und vier oberen doppelpaarigen Scherenelementen 22 bestehen. Doppelpaaring bedeutet in diesem Fall, zwei nebeneinander und hintereinander angeordnete einzelne Scherenelemente 21. Die unteren Scherenelemente 21 sind in zwei unteren Anlenkpunkten 23 mit der Montageplatte 3 verbunden und anderenends in zwei Anlenkpunkten 24 mit den zweiten Scherenelementen 22. Die zweiten Scherenelemente 22 sind in zwei oberen Anlenkpunkten 25 mit der Auflageplatte 4 verbunden. Die Verbindung der Scherenelemente 21 und 22 erfolgt im Anlenkpunkt 24 über zwei Drehachsen 27, 28, wobei jeweils zwei untere doppelpaarige Scherenelemente 21 nach vorne verschwenkbar und mit einer Drehachse 27 verbunden sind, während die beiden weiteren doppelpaarigen Scherenelemente 21 nach hinten verschwenkbar mit einer weiteren Drehachse 28 verbunden sind. Die oberen Scherenelemente 22 sind jeweils ebenfalls mit dem Anlenkpunkt 24 mit der ersten Drehachse 27 verbunden, sodass diese nach vorne verschwenkbar sind, während die beiden weiteren Scherenelemente 22 nach hinten verschwenkbar mit der weiteren Drehachse 28 verbunden sind. Beide Drehachsen 27, 28 sind mit einem Spindelhalter im mittleren Bereich ausgestattet, in dem eine Gewindespindel 26 eingedreht ist. Die Gewindespindel 26 weist an ihren beiden Enden gegenläufige Gewindeabschnitte auf, und zwar einmal linksdrehend und einmal rechtsdrehend, sodass bei einer Verdrehung der Gewindespindel 26 die beiden Drehachsen 27, 28 im Anlenkpunkt 24 voneinander weg oder aufeinander zubewegt werden. Aus der Figur 4 ist hierbei ersichtlich, dass die Scherenbeschläge 20 im vorderen Bereich des Fahrzeuges 1 so weit ausgefahren sind, dass die Sitzfläche 13 vorne angehoben ist. Die beiden Drehachsen 27, 28 des Anlenkpunktes 24 sind dicht benachbart angeordnet, sodass sich die unteren Scherenelemente 21 nahezu in einer vertikalen Position befinden. Die oberen Scherenelemente 22 sind leicht nach hinten geneigt. Demgegenüber sind die hinteren Scherenbeschläge 20 in ihrer tiefsten Position gezeigt, in der die beiden Drehachsen 27, 28 der Scherenbeschläge 20 weit beabstandet angeordnet sind. Aufgrund der Sitzneigung, welche der Neigung der Auflageplatte 4 entspricht, sind die oberen Scherenelemente 22 der hinteren Scherenbeschläge 20 verschwenkt und passen sich der Position der Auflageplatte 4 an. Diese Position ist im Weiteren aus der Figur 5 nochmals zu entnehmen.

Figur 5 zeigt in einer Seitenansicht das Fahrzeug 1 gemäß Figur 4 mit einer gekippten Sitzfläche 13 sowie Rückenlehne 14. Aus dieser Seitenansicht wird deutlich, dass der vordere Scherenbeschlag 20 mit den unteren Scherenelementen 21 und den oberen Scherenelementen 22 in eine hohe Position ausgefahren worden ist. Die Anlenkpunkte 24 mit ihren Drehachsen 27, 28 fluchten mit der Gewindespindel 26 und liegen dicht beieinander, während demgegenüber die Anlenkpunkte 24 des hinteren Scherenbeschlages 20 mit ihren Drehachsen 27, 28 weit beabstandet sind. Von diesen Scherenbeschlägen 20 sind die unteren Scherenelemente 21 in einer niedrigen Position angeordnet, während sich demgegenüber die Scherenelemente 22 frei nach dem durch die vorderen Scherenelemente vorgegebenen Winkel ausrichten, um die Anhebung der Sitzfläche 13 im vorderen Bereich zu unterstützen. Die Gewindespindeln 26 werden hierbei über einen Antriebsmotor 29 bewegt, sodass die Drehachsen 27, 28 entweder aufeinander zu oder voneinander wegbewegt werden können. Die Übertragung des erforderlichen Drehmomentes von dem Antriebsmotor 29 erfolgt beispielsweise über einen Zahnriemen 30, der auf einem Ritzel des Antriebsmotors 29 und auf einem Zahnrad der Gewindespindel aufliegt. Das Zahnrad ist hierbei auf das Ende der Gewindespindel 26 verdrehsicher, aber axial verschiebbar aufgeschoben.

Aus der Figur 5 wird im Weiteren ersichtlich, dass neben der Sitzfläche 13 zusätzlich eine Fußstütze 31 vorgesehen ist, welche unmittelbar mit der Auflageplatte 4 verschraubt ist. Die Fußstütze 31 wird somit beim Anheben der Sitzfläche 13 ebenfalls mit angehoben.

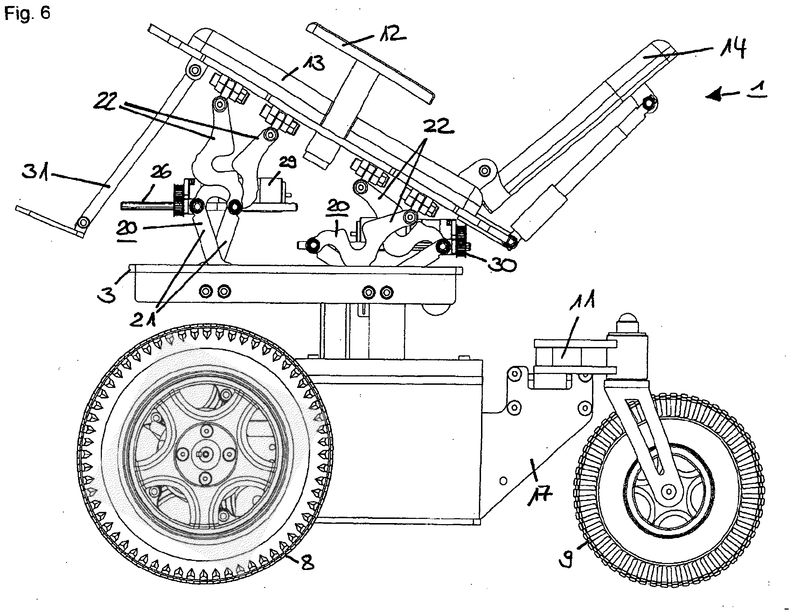

Figur 6 zeigt in einer Seitenansicht das Fahrzeug 1 gemäß Figur 5, wobei die untere Montageplatte 3 mitsamt dem übrigen Aufbau zusätzlich in Richtung der Antriebsräder 8 bewegt worden ist. Aus dieser Ansicht ist der vordere und hintere Scherenbeschlag 20 ersichtlich, welche in der beschriebenen Weise zur Anhebung der Sitzfläche 13 vorgesehen sind.

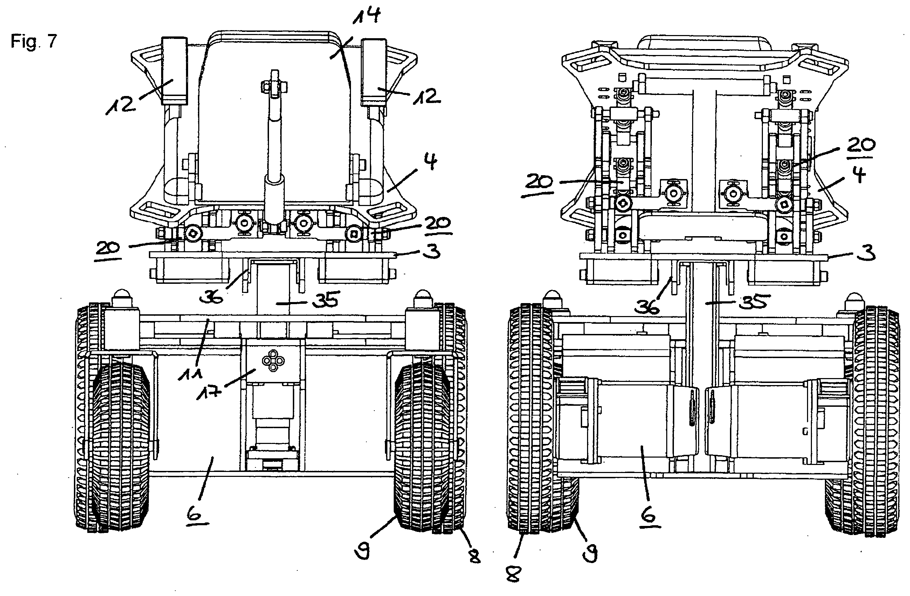

Figur 7 zeigt in einer vorderen- und rückwärtigen Ansicht das Fahrzeug 1 gemäß Figur 4 mit einer geneigten Auflageplatte 4. Aus dieser Ansicht wird deutlich, dass der Fahrzeugunterbau 6 über eine Stütze 35 mit der Montageplatte 3 verbunden ist, wobei die Stütze 35 in einem U-förmigen Profil 36 aufgenommen ist, welches Bestandteil einer linear verschiebbaren Einrichtung sein kann, um die Sitzfläche 13 nach vorne oder hinten zu verlagern.

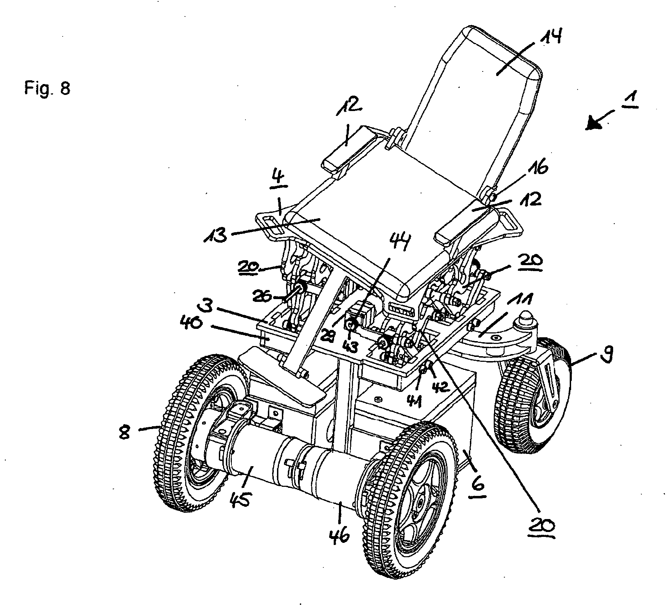

Figur 8 zeigt in einer perspektivischen Ansicht ein Fahrzeug 1 mit einer zum Teil angehobenen und diagonal geneigten Sitzfläche 13. Aus dieser Ansicht wird deutlich, dass die Scherenbeschläge 20 jeweils in den Eckbereichen der Montageplatte 3 angeordnet sind, wobei die Montageplatte 3 jeweils im Eckbereich eine Aussparung aufweist, die die Montage ermöglicht. In den Eckpunkten der Montageplatte 3 sind zusätzlich Durchbrüche vorgesehen, die zur Transportsicherung in einem Fahrzeug mithilfe von Spanngurten verwendet werden. Die Montageplatte 3 ist darüber hinaus mit einem umlaufenden kastenförmigen Unterbau 40 versehen, welcher zum Beispiel auch zur Lagerung der Drehachsen 41, 42 der unteren Anlenkpunkte 23 verwendet wird. Die Kopplung der Scherenelemente 21, 22 erfolgt wie zu den vorhergehenden Figuren beschrieben, wobei mithilfe des Antriebmotors 29, ein Antriebsritzel 43 und eine Zahnriemenscheibe 44 die Gewindespindel 26 über beispielsweise einen Zahnriemenantrieb bewegt wird. Im Ausführungsbeispiel ist der Zahnriemenantrieb nicht gezeigt. Alternativ zu einem Zahnriemenantrieb könnte auch eine direkte Verzahnung vorgesehen werden. Des Weiteren ist aus dieser Ansicht ersichtlich, dass die vorderen Antriebsräder 8 jeweils mit einem Antriebsmotor 45, 46 ausgestattet sind, welche nur für den Fahrantrieb des Fahrzeuges 1 verwendet werden.

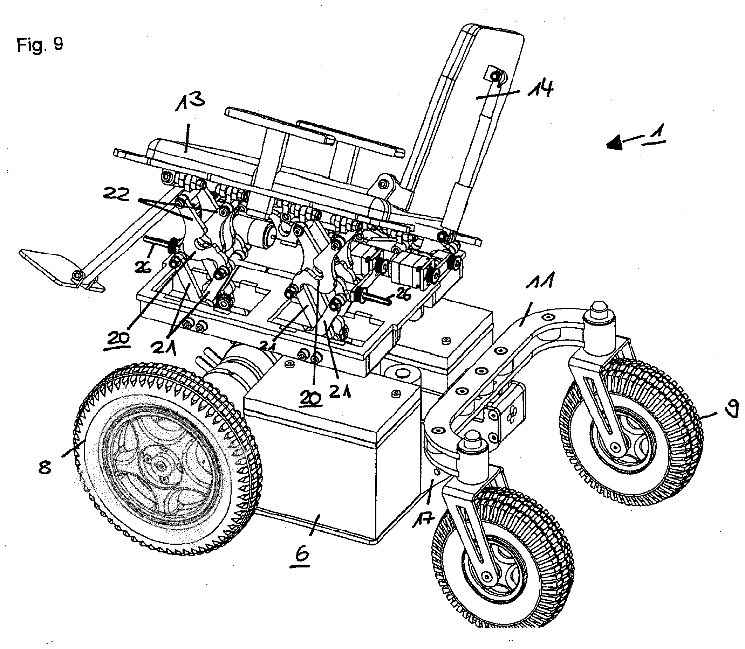

Figur 9 zeigt in einer perspektivischen Seitenansicht ebenfalls das Fahrzeug 1 mit den vorderen Antriebsrädern 8 und den hinteren Rädern 9 sowie der Pendelachse 11, welche über eine Konsole 17 mit dem Fahrzeugunterbau 6 verbunden ist. Die Sitzfläche 13 ist zusammen mit der Rückenlehne 14 zu einer Seite geneigt. Hierzu sind die beiden Scherenbeschläge 20 mithilfe der zugehörigen Antriebsmotoren 29 und der Gewindespindel 26 in eine erhöhte Position bewegt worden, sodass die unteren Scherenelemente 21 und die oberen Scherenelemente 22 in eine annähernd vertikale Position überführt wurden. Diese Position entspricht noch nicht der Maximalposition. Die weiteren Scherenbeschläge 20 auf der gegenüberliegenden Längsseite befinden sich demgegenüber in einer unteren Position, sodass die seitliche Neigung erreicht wird. Die Neigung könnte ebenso in die andere Richtung erfolgen, wenn die entsprechenden Scherenbeschläge 20 betätigt werden.

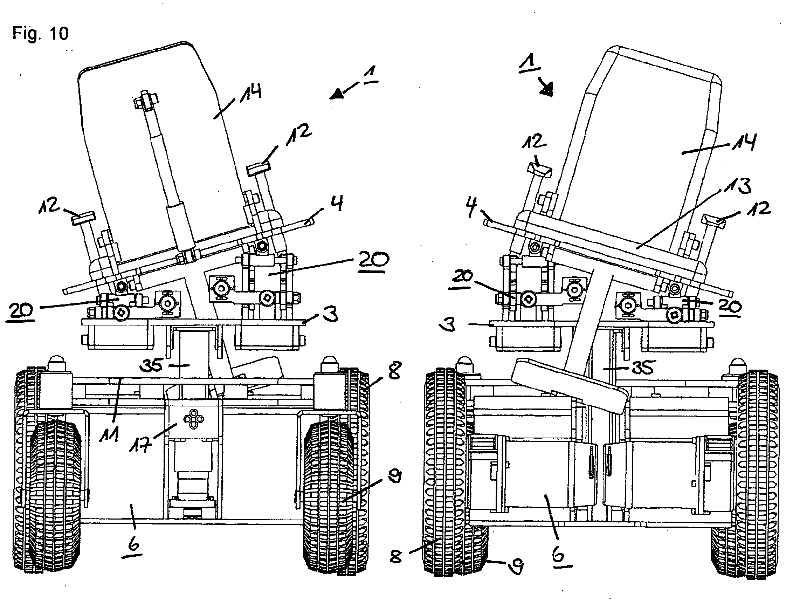

Figur 10 zeigt in einer vorderen und rückwärtigen Ansicht das Fahrzeug 1 gemäß Figur 9. Aus dieser Ansicht wird nochmals deutlich, welche Scherenbeschläge 20 hochgefahren und welche in einem unteren Zustand belassen worden sind. Im Grunde genommen weicht die Ausführung des Fahrzeuges 1 nicht von der aus den vorhergehenden Figuren ab, es ist lediglich eine seitliche Neigung mithilfe der Scherenbeschläge 20 eingestellt worden.

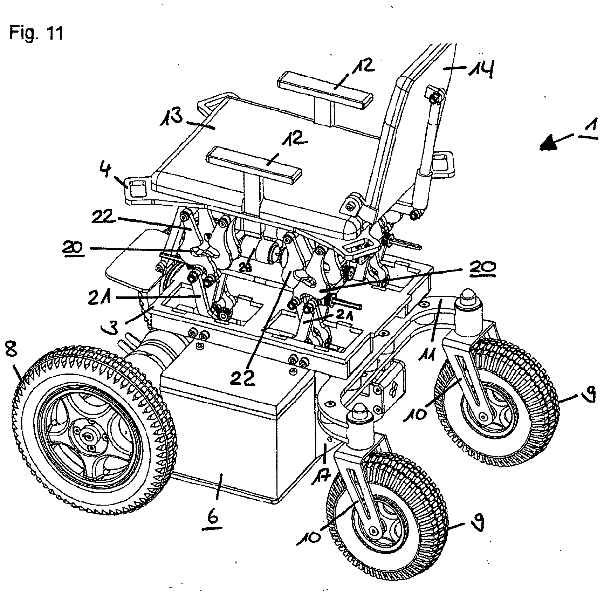

Figur 11 zeigt in einer perspektivischen Seitenansicht ebenfalls das Fahrzeug 1, wobei die vier Scherenbeschläge 20 mit ihren unteren Scherenelementen 21 und ihren oberen Scherenelementen 22 allesamt in eine nahezu vertikale Position hochgefahren wurden, sodass die Sitzfläche 13 mit Rückenlehne 14 in eine maximal erhöhte Position verfahren wurde.

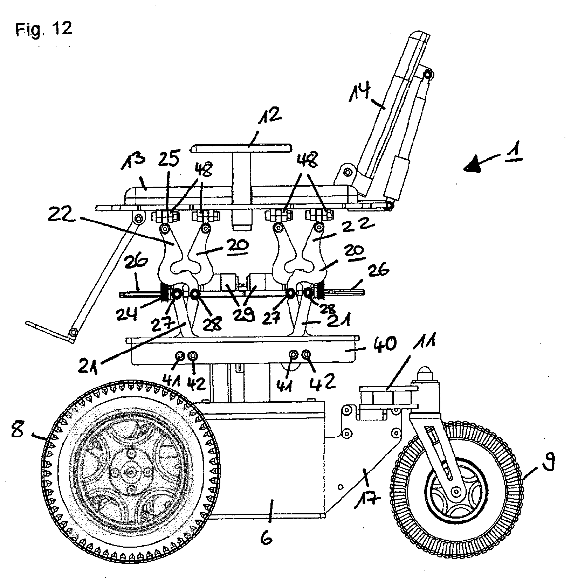

Figur 12 zeigt in einer Seitenansicht das Fahrzeug gemäß Figur 11 mit maximal hochgefahrener Sitzfläche 13 und Rückenlehne 14. Aus dieser Ansicht wird deutlich, dass die jeweiligen Scherenbeschläge 20 mit ihren unteren Scherenelementen 21 und ihren oberen Scherenelementen 22 mithilfe der Antriebsmotoren 29 und der Gewindespindel 26 in eine erhöhte Position, das heißt in annähernd vertikaler Ausrichtung angeordnet wurden. Aus dieser Ansicht ist im Weiteren ersichtlich, dass die unteren Scherenelemente 21 mit ihrem unteren Anlenkpunkt 23 durch die Drehachsen 41, 42 in dem kastenförmigen Unterbau 40 gelagert sind und die oberen Anlenkpunkte 25 über eine Konsole 48 mit der Auflageplatte 4 verbunden sind, während die mittleren Anlenkpunkte 24 eine Verbindung der oberen und unteren Scherenelemente 21, 22 ermöglichen, wobei im Bereich der Anlenkpunkte 24 die Gewindespindel 26 mithilfe der Spindelhalter fixiert sind. Bei einer Verdrehung der Gewindespindel 26 mithilfe der Antriebsmotoren 29 werden hierbei die beiden Drehachsen 27, 28 aufeinander zu oder voneinander weg bewegt, wodurch die Verschwenkung der unteren und oberen Scherenelemente 21, 22 erfolgt.

Figur 12 zeigt die maximale Position der Sitzhöhenverstellung, wobei zusätzlich mithilfe einer Laufschiene der Sitz gegenüber dem Fahrzeugunterbau 6 nach vorne oder hinten bewegt werden kann. Diese Bewegung ist aber unabhängig von einer Höhenverstellung der Sitzfläche 13, einer Neigung nach rechts oder links beziehungsweise nach vorne und hinten möglich.

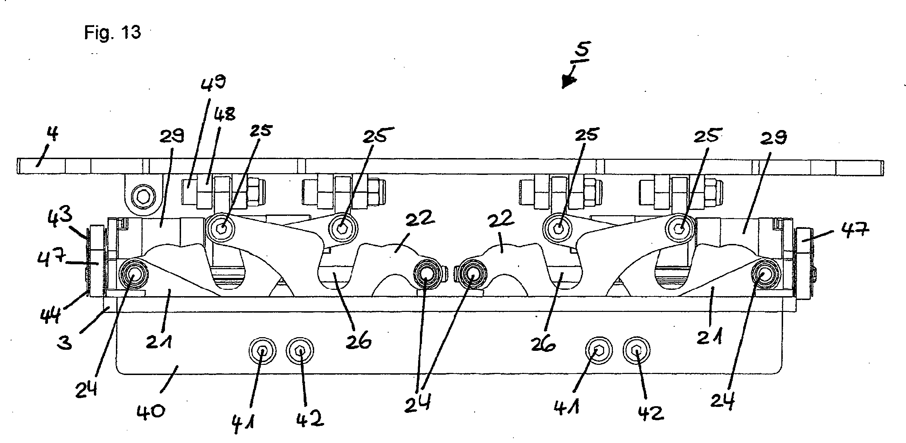

Figur 13 zeigt in einer Seitenansicht die Hebevorrichtung 5 ohne Sitzfläche und Fahrzeugunterbau. Die Hebevorrichtung 5 besteht aus der unteren Montageplatte 3 und einer oberen Auflageplatte 4, welche zur Montage der Sitzfläche oder eines Sitzaufbaus verwendet wird. Die untere Montageplatte 3 weist einen umlaufenden kastenförmigen Unterbau 40 auf, welcher zur Montage der Drehachsen 41, 42 vorgesehen ist. Die Drehachsen 41, 42 stellen den unteren Anlenkpunkt 23 der unteren Scherenelemente 21 dar, während in den Anlenkpunkten 24 die unteren und oberen Scherenelemente 21, 22 miteinander gelenkig verbunden sind. Über einen Spindelhalter ist eine Gewindespindel 26 verbunden, wobei die Spindelhalter sich unmittelbar auf der Achse der Anlenkpunkte 24 befinden. Soweit für den Antrieb des Antriebmotors 29 ein Zahnriemen 47 verwendet wird, ist der Welle des Antriebmotors 29 ein Antriebsritzel 43 beziehungsweise eine Zahnriemenscheibe 44 der Gewindespindel 26 zugeordnet. Die oberen Anlenkpunkte 25 der Scherenelemente 22 bestehen aus einer Drehachse, auf welche eine Schiebehülse verschieblich gelagert ist, wobei die Schiebehülse mit einer Verlängerung in einer Konsole 48 über eine Drehachse 49 schwenkbeweglich gelagert ist. Jeder obere Anlenkpunkt 25 der oberen Scherenelemente 22 ist auf diese Art und Weise mit der Auflageplatte 4 verbunden.

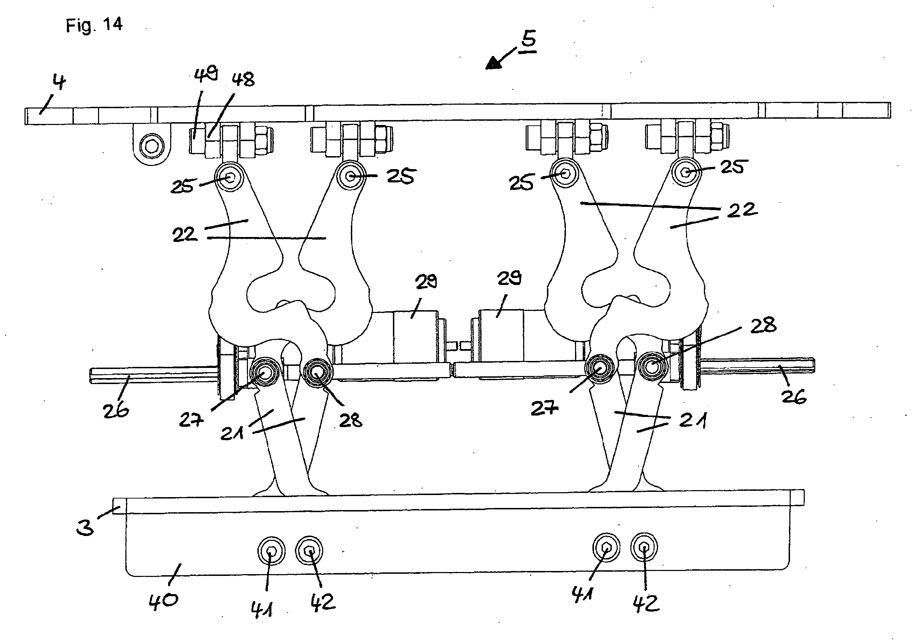

Figur 14 zeigt in einer Seitenansicht die Hebevorrichtung 5, bei der die Scherenelemente 21, 22 mithilfe der Gewindespindel 26, welche mithilfe der Antriebsmotoren 29 verdreht wurde, in eine erhöhte Position nahezu vertikal ausgerichtet sind. In dieser Stellung wird die Auflageplatte 4 nahezu parallel zur Montageplatte 3 angehoben, sodass lediglich eine Sitzhöhenverstellung erfolgt.

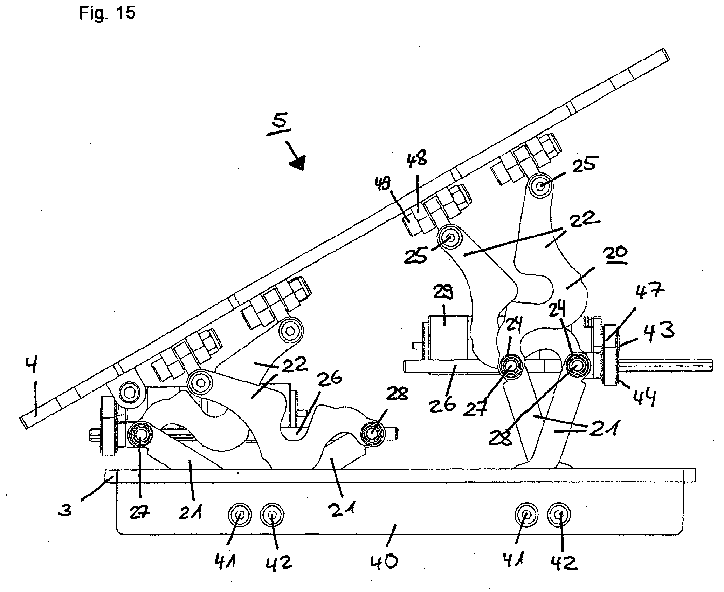

Figur 15 zeigt in einer Seitenansicht die Hebevorrichtung 5 mit einer geneigten Auflageplatte 4, welche mithilfe zweier Scherenbeschläge 20 angehoben wurde. Hierzu wird die Gewindespindel 26 mithilfe des Antriebsmotor 29 in der Weise verdreht, dass die beiden Drehachsen 27, 28 des Anlenkpunktes 24 aufeinander zubewegt wurden, während die Anlenkpunkte 24 bei den beiden weiteren Scherenbeschlägen 20 mithilfe der Gewindespindel 26 in eine entfernte Position verdreht wurden. Die vorderen Scherenbeschläge 20, linksseitig gezeichnet, sind hier nur insoweit ausgerichtet, wie dies zur Verlagerung der Auflageplatte 4 beim Ausfahren der hinteren Scherenbeschläge 20, rechtsseitig dargestellt, erforderlich ist. Die freie Beweglichkeit der oberen Scherenelemente 22 ermöglicht hierbei die Anpassung an den Neigungswinkel der Auflageplatte 4.

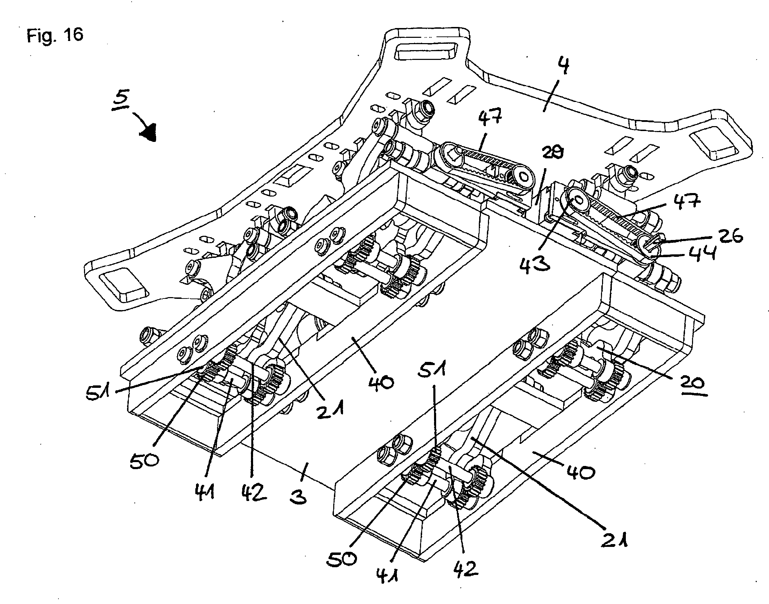

Figur 16 zeigt in einer perspektivischen Unteransicht die Hebevorrichtung 5 mit ihrer Montageplatte 3 und Auflageplatte 4 sowie den kastenförmigen Unterbau 40. Der Unterbau 40 dient zur Lagerung der Drehachsen 41, 42, welche in achtfacher Ausführung vorhanden sind, um die jeweiligen Scherenbeschläge 20 im unteren Bereich festzulegen. Auf den Drehachsen 41, 42 befinden sich jeweils Zahnräder 50, 51, die miteinander kämmen und dafür verantwortlich sind, dass die Auslenkung der unteren Scherenelemente 21 synchron in Bezug auf die Scherenbeschläge 20 und den Winkeln der Scherenelemente 21 zueinander erfolgt. Aus dieser Ansicht wird im Weiteren deutlich, dass die Gewindespindel 26 mit ihrer Zahnriemenscheibe 44 über einen Zahnriemen 47 angetrieben wird, welcher auf einem Antriebsritzel 43 des Antriebsmotors 29 liegt. Jedem Scherenbeschlag 20 ist eine solche Antriebseinheit zugeordnet, sodass eine unabhängige Bewegung der Scherenbeschläge 20 ermöglicht wird. Die Antriebsmotoren 29 liegen hierbei paarweise im Zwischenbereich zwischen den Scherenbeschlägen 20, sodass trotz der vorhandenen Antriebsmotoren die Scherenbeschläge 20 in eine tiefste Position heruntergefahren werden können. Somit kann die Bauhöhe der Hebevorrichtung 5 minimiert werden und wird letztendlich nur durch die Höhe der einzelnen Scherenelemente 21, 22, welche nebeneinanderliegend angeordnet sind, bestimmt.

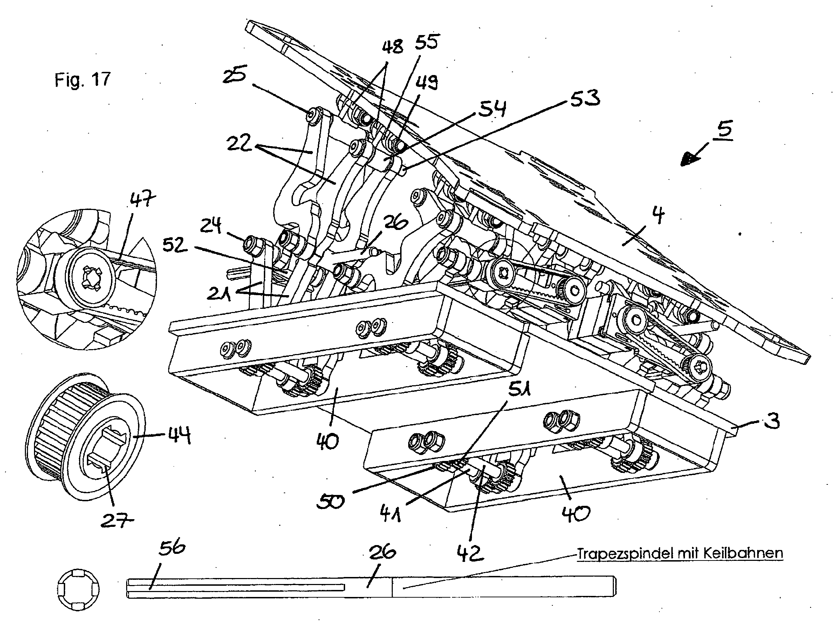

Figur 17 zeigt in einer perspektivischen Unteransicht die Hebevorrichtung 5, wie sie bereits aus der Figur 16 bekannt ist. In diesem Fall wurde lediglich die Auflageplatte 4 gegenüber der Montageplatte 3 in einer geneigten Position dargestellt, woraus deutlich wird, wie in den Anlenkpunkten 24 die unteren Scherenelemente 21 mit den oberen Scherenelemente 22 verbunden sind. Aus dieser Ansicht wird deutlich, dass von jedem Anlenkpunkt 24 ausgehend jeweils paarweise zwei untere Scherenelemente 21 und zwei obere Scherenelemente 22 mithilfe einer Drehachse verbunden sind, welche jeweils einen Spindelhalter 52 zur Aufnahme der Gewindespindel 26 aufweisen, sodass bei einem Verdrehen der Gewindespindel 26 die Anlenkpunkte 24 aufeinander zu oder voneinander weg bewegt werden können. Aus dieser Ansicht ist im Weiteren der obere Anlenkpunkt 25 der oberen Scherenelemente 22 ersichtlich, und zwar sind jeweils zwei Scherenelemente 22 paarweise mit einer Drehachse verbunden, auf der eine Schiebehülse 54 hin und her bewegt werden kann, welche mit einem radialen Ansatz 55 in einer Konsole 48 mit Drehachse 49 festgelegt ist. Die Schiebehülsen 54 ermöglichen einen seitlichen Querversatz für den Fall, dass zum Beispiel eine Neigungsanordnung diagonal oder seitlich zur Ausrichtung der Montageplatte 3 gefordert wird.

Ferner ist in einer Einzeldarstellung die Gewindespindel 26 dargestellt, welche einseitig mit vier jeweils um 90 Grad angeordneten Nuten 56 versehen ist, auf die eine Zahnriemenscheibe 44 aufschiebbar ist, welche einen korrespondierenden Durchbruch für die Gewindespindel 26 mit Nuten 57 zur Aufnahme von Nutensteinen aufweist. Damit wäre die Verdrehsicherheit gewährleistet, wobei auf der Zahnriemenscheibe 44 der Zahnriemen 47 aufliegt. Aus dieser Ansicht ist im Weiteren die Konsole 48 der Auflageplatte 4 ersichtlich, in der eine Drehachse 49, einliegt, auf welche der Ansatz 55 der Schiebehülse 54 aufgeschoben ist. Die Schiebehülse 54 liegt auf der Drehachse 53, sodass bei Neigungen der Auflageplatte 3 ein seitlicher Versatz der Schiebehülse 54 auf der Drehachse 53 möglich ist, um eventuelle Querspannungen zu vermeiden.

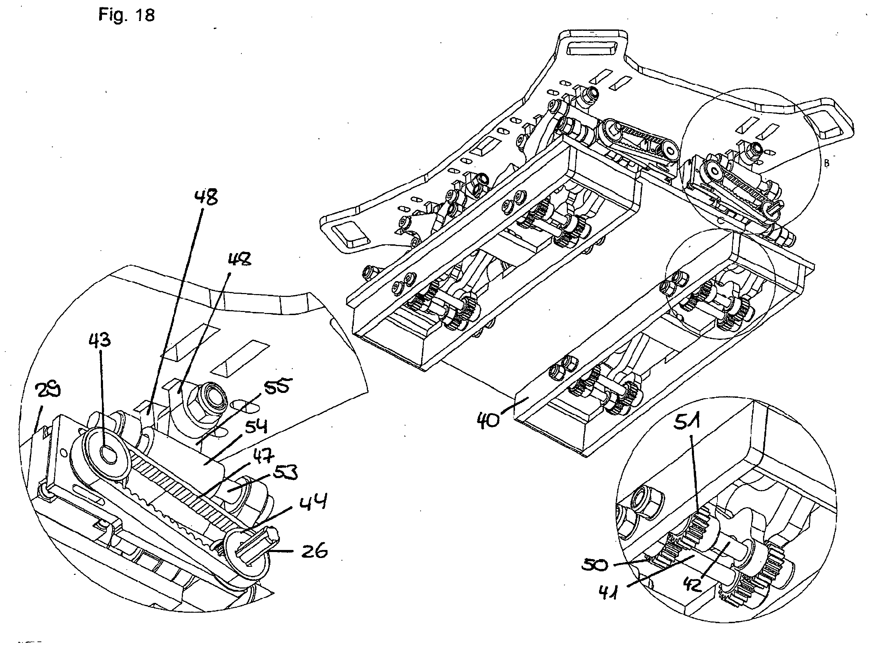

Figur 18 zeigt nochmals die Hebevorrichtung 5, wie sie bereits aus den vorhergehenden Figuren, insbesondere der Figur 17 bekannt ist, wobei in einer vergrößerten Detailzeichnung die Verbindung zwischen der Gewindespindel 26 und dem Antriebsmotor 29 mit einer ersten Zahnriemenscheibe 44 und einem Antriebsritzel 43 über einen Zahnriemen 47 erkennbar ist. In einer weiteren Teilansicht wird der untere Anlenkpunkt mit den Drehachsen 41, 42 dargestellt, auf denen jeweils Zahnräder 50, 51 drehbeweglich angeordnet sind, welche mit den Scherenelementen 21 drehfest verbunden sind und miteinander kämmen und somit für eine stabilisierende Bewegung der einzelnen Scherenbeschläge 20 sorgen.

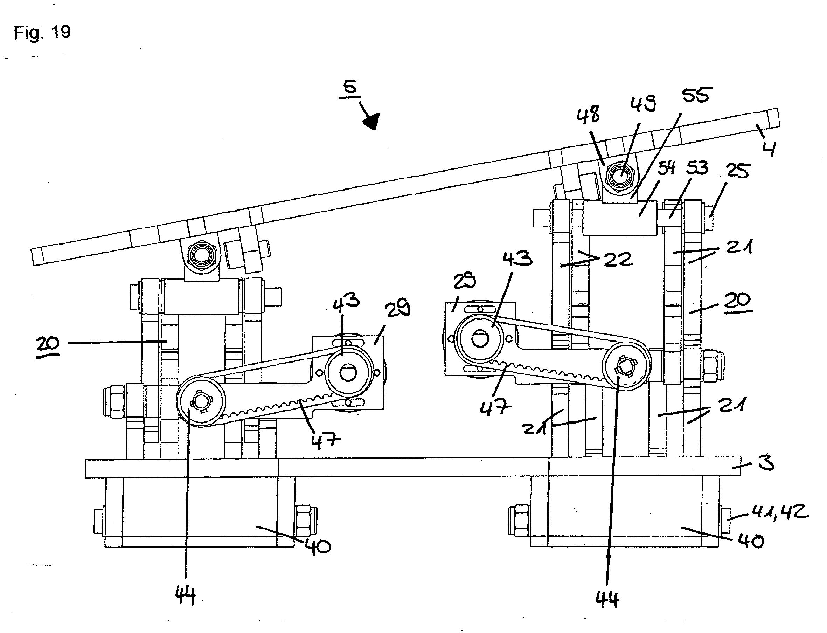

Figur 19 zeigt in einer rückwärtigen Ansicht die Hebevorrichtung 5 mit den Antriebsmotoren 29 und Zahnriemen 47 die jeweils auf einem Antriebsritzels 43 beziehungsweise der Zahnriemenscheibe 44 gelagert sind. Aus dieser Ansicht ist ersichtlich, dass die Scherenbeschläge 20 jeweils aus vier unteren Scherenelementen 21 und vier oberen Scherenelementen 22 bestehen. Die Scherenelemente sind sämtliche gegeneinander versetzt angeordnet, sodass diese ohne sich zu berühren von einer annähernd horizontalen Position in eine annähernd vertikale Position mithilfe der Antriebsmotoren 29 verfahren werden können. Sämtliche Scherenelemente 21, 22 sind endseitig mit Drehachsen verbunden, wobei im unteren Bereich jeweils zwei untere Scherenelemente 21 mit einer Drehachse 41 und die beiden weiteren mit einer Drehachse 42 verbunden sind. Es sind jeweils die Scherenelemente 21 miteinander verbunden, welche in gleicher Richtung bewegt werden. Die oberen Scherenelemente 22 sind jeweils paarig ebenfalls über eine Drehachse miteinander verbunden, wobei wiederum die beiden oberen Scherenelemente 22 auf einer Drehachse gelagert sind, welche sich in gleicher Drehrichtung bewegen. Aus dieser Ansicht ist ferner ersichtlich, dass die Schiebehülse 54 auf einer Drehachse 53 gelagert ist, und zwar im oberen Anlenkpunkt 25 und die Schiebehülse 54 mit einem Ansatz 55 über eine Drehachse 49 und eine Konsole 48 mit der Auflageplatte 4 verbunden ist. Aus dieser Ansicht wird deutlich, dass im Falle eines seitlichen Anhebens der Scherenbeschläge 20 auf nur einer Seite aufgrund der entstehenden Neigung der Auflageplatte 4 ein seitlicher Versatz der Schiebehülse 54 erforderlich wird, wenn nicht gleichzeitig die gegenüberliegenden Scherenbeschläge ebenfalls angehoben werden.

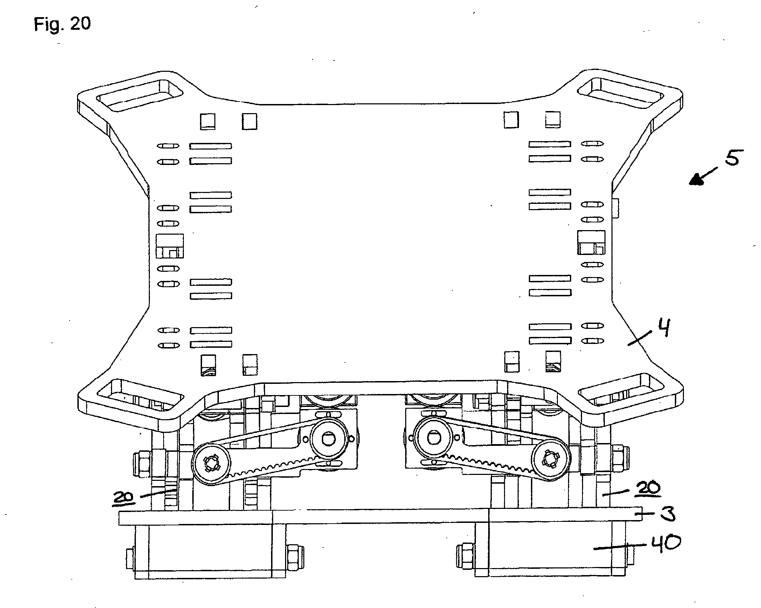

Figur 20 zeigt in einer weiteren rückwärtigen Ansicht die Hebevorrichtung 5, und zwar aus einer Blickrichtung auf die schräggestellte Auflageplatte 4 gegenüber der Montageplatte 3. In diesem Fall sind die vorderen Scherenelemente 21 in der unteren Position belassen worden, während demgegenüber die verdeckt liegenden Scherenelemente 20 wie sie beispielsweise aus Figur 19 ersichtlich ist, angehoben worden.

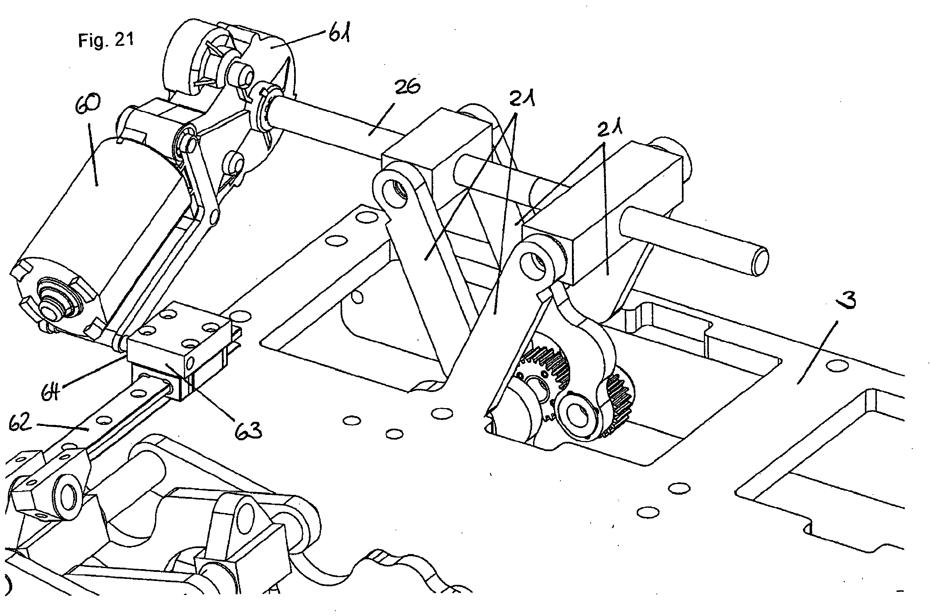

Figur 21 zeigt in einer perspektivischen Teilansicht die Montageplatte 3 und zwei untere Scherenelemente 21, welche jeweils paarweise angeordnet sind. Zwischen den Scherenelementen befindet sich die Gewindespindel 26, welche endseitig mit einem Antriebsmotor 60 ausgestattet ist. Der Antriebsmotor 60 besitzt eine Getriebestufe 61, welche mit einer Innenverzahnung auf der verzahnten Gewindespindel 26 endseitig aufgeschoben ist. Der Antriebsmotor 60 ist hierbei schwenkbeweglich gelagert, und zwar über eine Führungsschiene 62, beispielsweise eine Trapezschiene, auf der ein Führungsschlitten 63 als Gleitschuh verschieblich gelagert ist. Der Antriebsmotor 60 ist hierbei einenends in einem Schwenkpunkt 64 mit dem Führungsschlitten 63 verbunden, sodass eine Schwenkbewegung möglich wird, und zwar in Abhängigkeit der sich einstellenden Höhe der Gewindespindel 26 bei einem Zusammenfahren der Scherenelemente 21. Die Verstelleinrichtung umfasst hierbei Scherenelemente 21 in den jeweiligen Eckpunkten der Montageplatte, sodass vier Gewindespindeln 26 vorliegen und damit vier Antriebsmotoren 60 eingesetzt werden müssen. Jeder Scherenbeschlag mit seinen Scherenelementen 21 kann somit individuell und unabhängig voneinander in der Höhe verstellt werden, um die gewünschte Position der nicht dargestellten Auflageplatte zu ermöglichen.

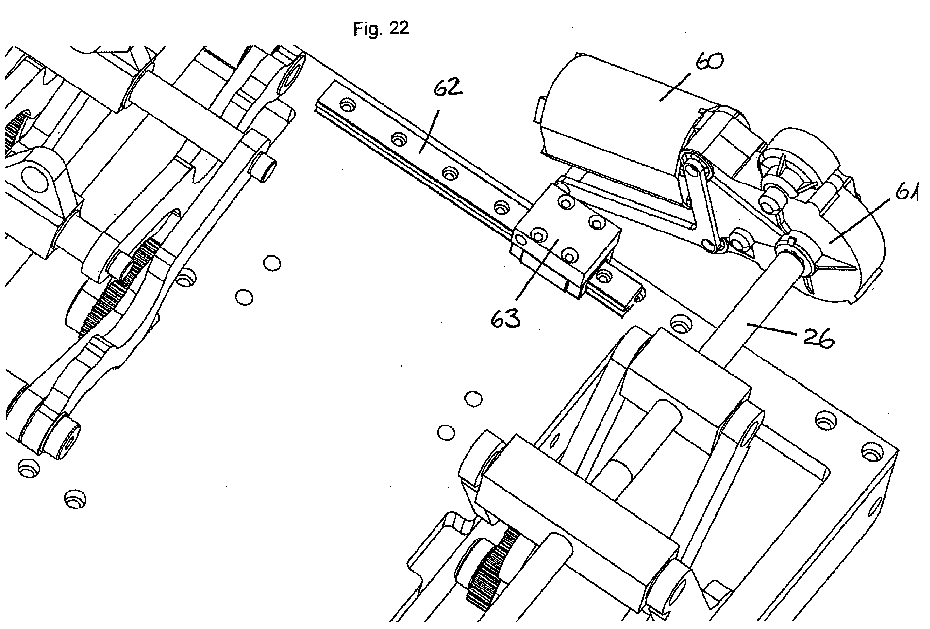

Figur 22 zeigt in einer weiteren perspektivischen Teilansicht den Antriebsmotor 60 mit Getriebestufe 61, welcher auf der Gewindespindel 26 aufgesetzt ist. Aus dieser Sicht ist die Führungsschiene 62 mit Führungsschlitten 63 nochmals zu erkennen.

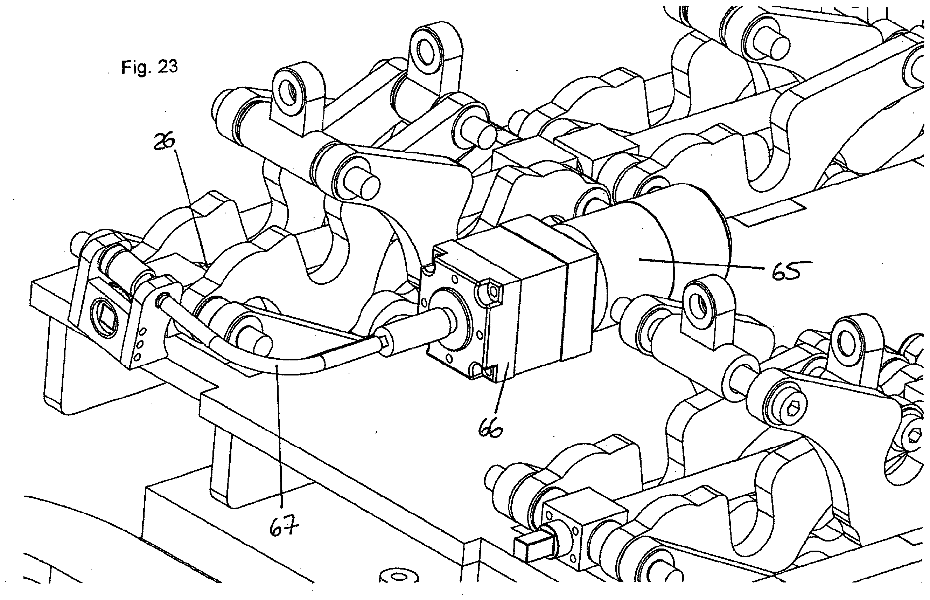

Figur 23 zeigt in einer perspektivischen Teilansicht eine weitere alternative Antriebseinheit mithilfe eines Antriebsmotors 65, einer Getriebestufe 66 und einer flexiblen Welle 67. Der Antriebsmotor 65 ist hierbei parallel zur Gewindespindel 26 ausgerichtet und kann somit zwischen den vorhandenen Scherenbeschlägen oder an einer beliebigen Stelle angeordnet werden. Die flexible Welle 67 treibt über eine Verzahnung unmittelbar die Gewindespindel 26 an, sodass auch durch dieses Antriebskonzept eine unabhängige Höhenverstellung für jeden Scherenbeschlag mit unteren Scherenelementen 21 erfolgen kann.

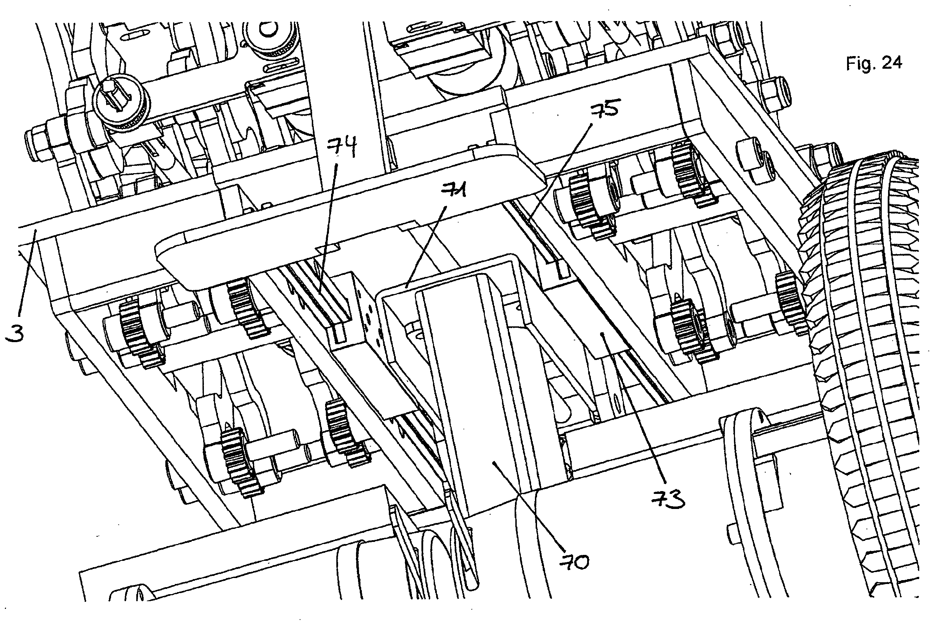

Figur 24 zeigt in einer unteren Teilansicht die Montageplatte 3, welche über eine Stütze 70 mit dem Fahrzeugunterbau 6 verbunden ist. Die Stütze 70 besitzt kopfseitig ein U-förmig gebogenes Profil 71. Das Profil 71 ist mit zwei Linearantriebseinheiten 72, 73 verbunden, welcher auf einer Laufschiene 74, 75 hin und her gleiten können. Die Lineareinheiten 72, 73 werden ebenfalls über die vorhandene Steuerungseinheit des Fahrzeuges angesteuert und ermöglichen auf diese Weise eine Verschiebung des gesamten oberen Aufbaus mit der Auflageplatte 4 und der Sitzfläche 13 in Fahrtrichtung oder entgegen der Fahrtrichtung, damit eine individuelle Anpassung der Sitzposition und Schwerpunktverlagerung erfolgen kann.

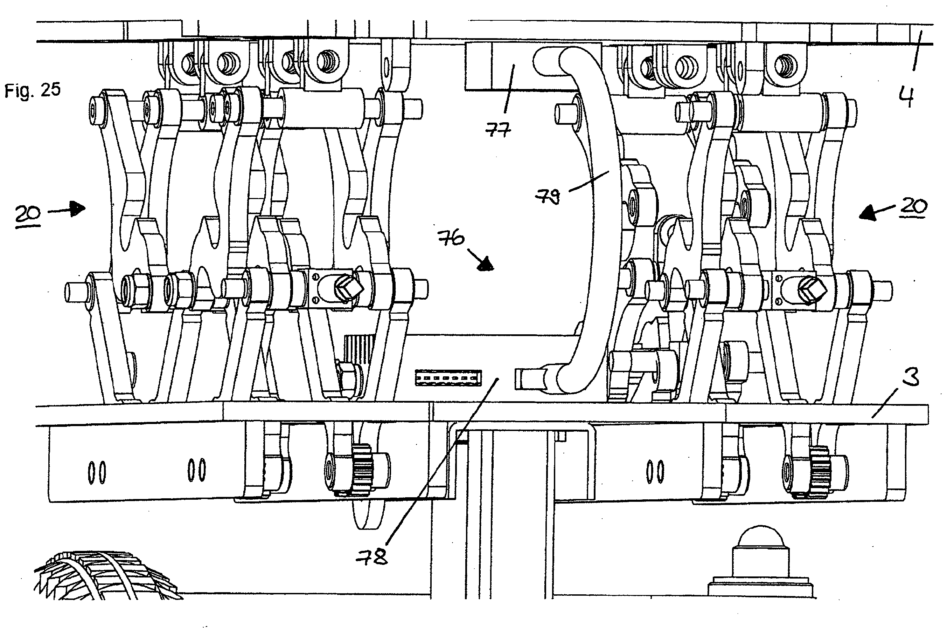

Figur 25 zeigt in einer perspektivischen Teilansicht zwischen der Montageplatte 3 und der Auflageplatte 4 die Anordnung einer Steuerungseinheit 76, welche für die unabhängige Verstellung der vorhandenen Scherenbeschläge 20 erforderlich ist. Unterhalb der Auflageplatte 4 befindet sich ein Gyrosensor 77, welcher über ein Kabel 79 mit der Steuerungseinheit 76 verbunden ist. Die Steuerungseinheit 76 ist ebenfalls mit einem Gyrosensor 78 ausgestattet, sodass mithilfe der beiden Gyrosensoren 77, 78 die Position der Montageplatte 3 im Verhältnis zu einem fest vorgegebenen Winkel der Auflageplatte 4 gemessen werden kann. Wenn die Auflageplatte 4 mit dem montierten Sitz in eine bestimmte Position gefahren wird, die beispielsweise für den Benutzer vorteilhaft ist, kann bei einem Befahren von unebenem Gelände, gleichbedeutend mit einer Lageveränderung des unteren und oberen Gyrosensors eine Nachjustierung der Scherenbeschläge 20 erfolgen. Hierzu ist es lediglich notwendig, die vorher bekannten Daten der Gyrosensoren 77, 78 und der sich hieraus ergebenden Differenz aufgrund unterschiedlicher Ausrichtungen erneut einzustellen, und zwar durch Veränderung der Höheneinstellung eines jeden Scherenbeschlages 20. Somit kann bei kontinuierlicher Fahrt auf unebenem Gelände eine vollautomatische Nachstellung der Sitzposition erfolgen, ohne dass der Benutzer eines Rollstuhls eingreifen muss.

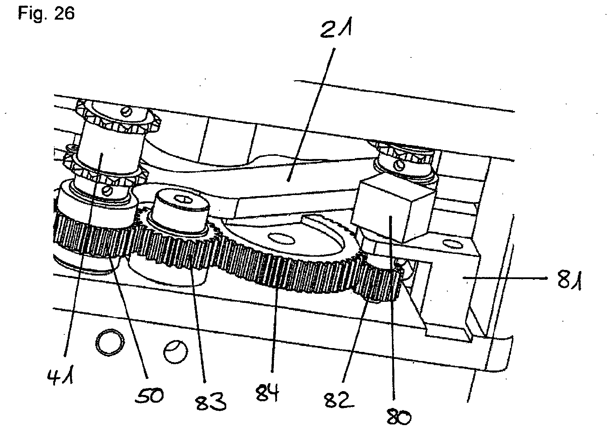

Figur 26 zeigt in einer perspektivischen Unteransicht eine Drehachse 41 mit Zahnrad 50. Zur Erfassung der exakten Winkelposition ist ein Winkelgeber 80 integriert, welcher auf einem Montageblock 81 befestigt ist und über ein Zahnradritzel 82 verfügt. Zwischen dem Zahnrad 50 und dem Ritzel 82 sind zwei weitere Zahnräder 83, 84 angeordnet, welche eine Untersetzung ermöglichen, sodass die Hubbewegung der unteren Scherenelemente 21 zu einer untersetzten Drehung des Zahnradritzels 82 führt und somit der Winkelgeber 80 direkt angesteuert werden kann, welcher in der Regel nur einen Winkelbereich von ca. 270 Grad besitzt.

### Bezugszeichenliste

- 1: Fahrzeug
- 2: Verstelleinrichtung
- 3: Montageplatte
- 4: Auflageplatte
- 5: Hebevorrichtung
- 6: Fahrzeugunterbau
- 7: Gehäuse
- 8: Antriebsrad
- 9: Rad
- 10: Aufnahme
- 11: Pendelachse
- 12: Armauflage
- 13: Sitzfläche
- 14: Rückenlehne
- 15: Verstelleinrichtung
- 16: Anlenkpunkt
- 17: Konsole
- 20: Scherenbeschlag
- 21: Scherenelement
- 22: Scherenelement
- 23: Anlenkpunkt
- 24: Anlenkpunkt
- 25: Anlenkpunkt
- 26: Gewindespindel
- 27: Drehachse
- 28: Drehachse
- 29: Antriebsmotor
- 30: Zahnriemen
- 31: Fußstütze
- 35: Stütze
- 36: Profil
- 40: Unterbau
- 41: Drehachse
- 42: Drehachse
- 43: Antriebsritzel
- 44: Zahnriemenscheibe
- 45: Antriebsmotor
- 46: Antriebsmotor
- 47: Zahnriemen
- 48: Konsole
- 49: Drehachse
- 50: Zahnrad
- 51: Zahnrad
- 52: Spindelhalter
- 53: Drehachse
- 54: Schiebehülse
- 55: Ansatz
- 56: Nuten
- 57: Nuten
- 60: Antriebsmotor
- 61: Getriebestufe
- 62: Führungsschiene
- 63: Führungsschlitten
- 64: Schwenkpunkt
- 65: Antriebsmotor
- 66: Getriebestufe
- 67: Welle
- 70: Stütze
- 71: Profil
- 72: Linearantriebseinheit
- 73: Linearantriebseinheit
- 74: Laufschiene
- 75: Laufschiene
- 76: Steuerungseinheit
- 77: Gyrosensor
- 78: Gyrosensor
- 79: Kabel
- 80: Winkelgeber
- 81: Montageblock
- 82: Zahnradritzel
- 83: Zahnrad
- 84: Zahnrad

## Patentansprüche

1. Verstelleinrichtung (2) für Fahrzeuge, insbesondere Elektrorollstühle oder Rehabilitationsfahrzeuge, umfassend zumindest eine Montageplatte (3) und eine Auflageplatte (4) mit einer Hebevorrichtung (5), welche zumindest zwei Scherenbeschläge (20) umfasst, welche an der Seitenlängskante oder jeweils in einem Eckbereich der Montage- (3) bzw. Auflageplatte (4) angeordnet und über ein Antriebsmittel in der Höhe verstellbar sind **dadurch gekennzeichnet,**
**dass** die Scherenbeschläge (20) unabhängig voneinander höhenverstellbar sind.

2. Verstelleinrichtung (2) nach Anspruch 1,
**dadurch gekennzeichnet,**
**dass** jeder Scherenbeschlag (20) aus einer Doppelschere besteht, und/oder dass jeder Scherenbeschlag (20) aus vier jeweils paarig angeordneten Scherenelementen besteht, wobei jeweils ein erstes unteres (21) und ein zweites oberes Scherenelement (22) vorhanden sind, und/oder dass die Scherenelemente (21, 22) eines Scherenbeschlages (20) in jeweils einer versetzten Ebene in derart angeordnet sind, dass keine Berührung erfolgt.

3. Verstelleinrichtung (2) nach Anspruch 2,
**dadurch gekennzeichnet,**
**dass** die unteren (21) und oberen Scherenelemente (22) in einem gemeinsamen Anlenkpunkt (24) mit einer Drehachse (27, 28) verbunden sind.

4. Verstelleinrichtung (2) nach einem der Ansprüche 1, 2 oder 3,
**dadurch gekennzeichnet,**
**dass** jeder Scherenbeschlag (20) ein erstes unteres Scherenelement (21) aufweist, welches über einen ersten Anlenkpunkt mit einer Konsole der Montageplatte (3) und über einen zweiten Anlenkpunkt (24) mit einer Drehachse (27, 28) verbunden ist, und/oder dass jeder Scherenbeschlag (20) ein zweites oberes Scherenelement (22) aufweist, welches über einen ersten Anlenkpunkt (25) mit der Auflageplatte (4) und einen zweiten Anlenkpunkt (24) mit der Drehachse (21) des ersten Scherenelementes (21) verbunden ist.

5. Verstelleinrichtung (2) nach einem der Ansprüche 1 bis 4,
**dadurch gekennzeichnet,**
**dass** die Drehachsen (27, 28) eines Scherenbeschlages (20) jeweils einen Spindelhalter (52) aufweisen, in welchem eine Gewindespindel (26) eingedreht ist, wobei die Gewindespindel (26) einenends ein rechtsdrehendes Gewinde und anderenends ein linksdrehendes Gewinde aufweist.

6. Verstelleinrichtung (2) nach Anspruch 5,
**dadurch gekennzeichnet,**
**dass** die Gewindespindel (26) der Scherenbeschläge (20) durch jeweils ein Antriebsmittel antreibbar sind, wobei es sich um einen Elektromotor, hydraulischen oder pneumatischen Motor handelt, welcher unmittelbar die Gewindespindel (26) antreibt oder mittelbar über einen Zahnriemen (47) oder eine flexible Welle (67).

7. Verstelleinrichtung (2) nach Anspruch 6,
**dadurch gekennzeichnet,**
**dass** das Antriebsmittel, vorzugsweise ein Elektromotor, mit einem Zahnrad unmittelbar über eine korrespondierende Verzahnung auf dem Ende der Gewindespindel (26) gelagert ist, wobei das Antriebsmittel über eine Schlittenführung schwenkbeweglich gelagert ist, um der Höhenbewegung der Gewindespindel (26) zu folgen.

8. Verstelleinrichtung (2) nach Anspruch 4,
**dadurch gekennzeichnet,**
**dass** der erste Anlenkpunkt (25) der zweiten, oberen Scherenelemente (22) aus einer mit der Auflageplatte (4) verbundenen, drehbaren Hülse (54) besteht, welche auf einer Drehachse (53) angeordnet ist, die die beiden oberen Anlenkpunkte (25) der benachbarten Scherenelemente (22) verbindet, wobei mindestens eine Hülse (54) eines Scherenbeschlags zusätzlich verschieblich auf der Drehachse (53) gelagert ist.

9. Verstelleinrichtung (2) nach einem der Ansprüche 4 oder 8,
**dadurch gekennzeichnet,**
**dass** der erste Anlenkpunkt (23) der ersten unteren Scherenelemente (21) durch jeweils eine Drehachse (41, 42) festgelegt ist, wobei die Drehachsen (41, 42) in einem Rahmenteil gelagert sind und drehbewegliche Verzahnungselemente, beispielsweise Zahnräder (50, 51), aufnehmen, welche mit den ersten Scherenelementen (21) verbunden sind.

10. Verstelleinrichtung (2) nach einem der Ansprüche 1 bis 9,
**dadurch gekennzeichnet,**
**dass** die Montageplatte (3) mit einem Unterbau eines Fahrzeuges (1) verbindbar ist, und dass auf die Auflageplatte (4) eine Sitzfläche (13) mit Rückenlehne (14) festlegbar ist oder die Sitzfläche bildet, und/oder dass die Hebevorrichtung (5) flachbauend eine Höhe von weniger als 12 cm in einer eingefahrenen Position aufweist und zumindest teilweise in einem kastenförmigen Unterbau integriert ist.

11. Verstelleinrichtung (2) nach einem der Ansprüche 1 bis 10,
**dadurch gekennzeichnet,**
**dass** über die Scherenbeschläge (20) entlang der Längsseitenkanten die Auflageplatte (4) anhebbar ist, wodurch ein seitliches Kippen oder ein Anheben der Auflageplatte (4) erfolgt, oder dass über die Scherenbeschläge (20) in den Eckbereichen die Auflageplatte (4) anhebbar ist, wodurch die Auflageplatte (4) in eine annähernd horizontale Position absenkbar oder anhebbar ist und zusätzlich eine seitliche Neigung, ein Kippen nach hinten und vorne oder eine diagonale Verlagerung der Auflageplatte (4) erfolgt.

12. Verstelleinrichtung (2) nach einem oder mehreren der Ansprüche 1 bis 11,
**dadurch gekennzeichnet,**
**dass** die Montageplatte (3) mit zumindest einer Laufschiene (74, 75) verbunden ist und die Laufschiene (74, 75) in einer Linearantriebseinheit (72, 73) gelagert ist, wobei die Linearantriebseinheit (72, 73) mit dem Fahrzeugunterbau (6) fest verbunden ist, und wobei die Laufschiene (74, 75) über eine Zahnstange, einen Riemen, eine Spindel oder einen Linearmotor gegenüber dem Fahrzeugunterbau (6) bewegbar ist.

13. Verstelleinrichtung (2) nach einem oder mehreren der Ansprüche 1 bis 12,
**dadurch gekennzeichnet,**
**dass** die Bewegung der unteren Scherenelemente (21) über einen Endschalter begrenzt ist, und/oder dass die Bewegung der unteren Scherenelemente (21) über ein Zahnelement und einen Winkelgeber erfassbar ist, wobei das Zahnelement mit dem Verzahnungselement des ersten Anlenkpunktes kämmt, und/oder dass die Bewegung der unteren Scherenelemente (21) über die Drehung der Gewindespindel (26) mithilfe eines Drehzahlgebers überwachbar ist.

14. Verstelleinrichtung (2) nach einem oder mehreren der Ansprüche 1 bis 13,
**dadurch gekennzeichnet,**
**dass** die Montageplatte (3) mit zumindest einem Gummipuffer, vorzugsweise vier Gummipuffern ausgestattet ist, auf welche die Auflageplatte (4) in der unteren Position zu liegen kommt, und/oder dass die Montageplatte (3) und die Auflageplatte (4) jeweils mit einem Gyrosensor (77) bestückt sind, welche mit einer Steuerungseinheit (76) der Antriebsmittel gekoppelt sind.

## Claims

1. Adjustment device (2) for vehicles, in particular electric wheel chairs or rehabilitation vehicles, comprising at least one mounting plate (3) and one support plate (4) with a lifting device (5) which comprises at least two scissor mountings (20) which are arranged at the lateral longitudinal edge or each in a corner region of the mounting (3) or support plate (4), respectively, and are vertically adjustable via a driving means, **characterized in that** the scissor mountings (20) are vertically adjustable independently.

2. Adjustment device (2) according to claim 1, **characterized in that** each scissor mounting (20) consists of double scissors and/or that each scissor mounting (20) consists of four scissor elements each arranged in pairs, one first lower (21) and one second upper scissor element (22) being present, and/or that the scissor elements (21, 22) of one scissor mounting (20) are arranged in an offset plane each such that there is no contact.

3. Adjustment device (2) according to claim 2, **characterized in that** the lower (21) and upper scissor elements (22) are connected to an axis of rotation (27, 28) in a common pivot point (24).

4. Adjustment device (2) according to one of claims 1, 2 or 3, **characterized in that** each scissor mounting (20) comprises a first lower scissor element (21) which is connected, via a first pivot point, to a console of the mounting plate (3) and, via a second pivot point (24), to an axis of rotation (27, 28), and/or that each scissor mounting (20) comprises a second upper scissor element (22) which is connected, via a first pivot point (25), to the support plate (4) and, via a second pivot point (24), to the axis of rotation (21) of the first scissor element (21).

5. Adjustment device (2) according to one of claims 1 to 4, **characterized in that** the axes of rotation (27, 28) of a scissor mounting (20) comprise one spindle holder (52) each into which a threaded spindle (26) is screwed, the threaded spindle (26) comprising at one end a clockwise thread, and at the other end a counter clockwise thread.

6. Adjustment device (2) according to claim 5, **characterized in that** the threaded spindle (26) of the scissor mountings (20) is drivable by one driving means each, the driving means being an electric motor, a hydraulic or a pneumatic motor which drives the threaded spindle (26) directly or indirectly via a sprocket belt (47) or a flexible shaft (67).

7. Adjustment device (2) according to claim 6, **characterized in that** the driving means, preferably an electric motor, is mounted, with a toothed wheel, directly on the end of the threaded spindle (26) via a corresponding gearing, the driving means being mounted so as to be movable in a pivoting manner via a carriage guide to follow the vertical motion of the threaded spindle (26).

8. Adjustment device (2) according to claim 4, **characterized in that** the first pivot point (25) of the second, upper scissor elements (22) consists of a rotating sleeve (54) connected to the support plate (4) and arranged on an axis of rotation (53) that connects the two upper pivot points (25) of the adjacent scissor elements (22), at least one sleeve (54) of a scissor mounting being additionally slidably mounted on the axis of rotation (53).

9. Adjustment device (2) according to one of claims 4 or 8, **characterized in that** the first pivot point (23) of the first lower scissor elements (21) is fixed by one axis of rotation (41, 42) each, the axes of rotation (41, 42) being mounted in a frame portion and receiving rotationally movable gearing elements, for example toothed wheels (50, 51), which are connected to the first scissor elements (21).

10. Adjustment device (2) according to one of claims 1 to 9, **characterized in that** the mounting plate (3) is connectable to a substructure of a vehicle (1) and that a seat surface (13) with a backrest (14) is fixable on the support plate (4) or forms the seat surface, and/or that the lifting device (5) comprises, in a flat design, a height of less than 12 cm in a retracted position and is at least partially integrated in a box-shaped substructure.

11. Adjustment device (2) according to one of claims 1 to 10, **characterized in that** via the scissor mountings (20) along the longitudinal lateral edges, the support plate (4) may be lifted, resulting in a lateral tilt or a lifting of the support plate (4), or that via the scissor mountings (20), the support plate (4) may be lifted in the corner regions, whereby the support plate (4) may be lowered or lifted into an approximately horizontal position, and in addition, a lateral tilt, a backward and forward tilt or a diagonal relocation of the support plate (4) is effected.

12. Adjustment device (2) according to one or several ones of claims 1 to 11, **characterized in that** the mounting plate (3) is connected to at least one sliding rail (74, 75), and the sliding rail (74, 75) is mounted in a linear driving unit (72, 73), the linear driving unit (72, 73) being firmly connected to the vehicle's substructure (6), and wherein the sliding rail (74, 75) may be moved with respect to the vehicle base (6) via a toothed rack, a belt, a spindle or a linear motor.

13. Adjustment device (2) according to one or several ones of claims 1 to 12, **characterized in that** the movement of the lower scissor elements (21) is limited via an end switch, and/or that the movement of the lower scissor elements (21) is detectable via a tooth element and an angle transmitter, wherein the tooth element meshes with the gearing element of the first pivot point, and/or that the movement of the lower scissor elements (21) may be monitored via the rotation of the threaded spindle (26) by means of a speed sensor.

14. Adjustment device (2) according to one or several ones of claims 1 to 13, **characterized in that** the mounting plate (3) is provided with at least one rubber buffer, preferably four rubber buffers, on which the support plate (4) comes to rest in the lower position, and/or that the mounting plate (3) and the support plate (4) are each equipped with one gyro sensor (77) coupled to a control unit (76) of the driving means.

## Revendications

1. Dispositif de réglage (2) pour véhicules, en particulier fauteuils roulants électriques ou véhicules de réhabilitation, comprenant au moins une plaque de montage (3) et une platine (4) comportant un moyen de levage (5) qui comprend au moins deux ferrures en ciseaux (20) qui sont disposés sur le bord longitudinal latéral ou, chacun, dans une zone d'angle de la plage de montage (3), respectivement de la platine (4), et qui sont réglables en hauteur par un moyen d'entraînement,
**caractérisé en ce que**
les ferrures en ciseaux (20) peuvent être réglées en hauteur indépendamment les uns des autres.

2. Dispositif de réglage (2) selon la revendication 1, **caractérisé en ce que**
chaque ferrure en ciseaux (20) est composée de deux ciseaux et/ou **en ce que**
chaque ferrure en ciseaux (20) est composée de quatre éléments en ciseaux disposés respectivement par paire, un premier élément en ciseaux inférieur (21) et un second élément en ciseaux supérieur (22) étant à chaque fois présents, et/ou **en ce que**
les éléments en ciseaux (21, 22) d'une ferrure en ciseaux (20) sont disposés chacun dans un plan décalé de telle sorte qu'aucun contact ne se produise.

3. Dispositif de réglage (2) selon la revendication 2,
**caractérisé en ce que**
les éléments en ciseaux inférieurs (21) et supérieurs (22) sont reliés à un axe de rotation (27, 28) dans un point de pivotement commun (24).

4. Dispositif de réglage (2) selon une des revendications 1, 2 ou 3, **caractérisé en ce que**
chaque ferrure en ciseaux (20) présente un premier élément en ciseaux inférieur (21) qui est relié, par le biais d'un premier point de pivotement, à une console de la plaque de montage (3) et, par le biais d'un second point de pivotement (24), à un axe de rotation (27, 28), et/ou **en ce que** chaque ferrure en ciseaux (20) présente un second élément en ciseaux supérieur (22) qui est relié par le biais d'un premier point de pivotement (25) à la platine (4) et d'un second point de pivotement (24) à l'axe de rotation (21) du premier élément en ciseaux (21).

5. Dispositif de réglage (2) selon une des revendications 1 à 4, **caractérisé en ce que**
les axes de rotation (27, 28) d'une ferrure en ciseaux (20) présentent chacun un support de broche (52), dans lequel une broche filetée (26) est tournée, la broche filetée (26) présentant à une extrémité un filetage tournant à droite et à l'autre extrémité un filetage tournant à gauche.

6. Dispositif de réglage (2) selon la revendication 5,
**caractérisé en ce que**
la broche filetée (26) des ferrures en ciseaux (20) peut être entraînée respectivement par un moyen d'entraînement, pour lequel il s'agit d'un moteur électrique, hydraulique ou pneumatique, qui entraîne directement la broche filetée (26) ou indirectement par le biais d'une courroie dentée (47) ou d'un arbre flexible (67).

7. Dispositif de réglage (2) selon la revendication 6,
**caractérisé en ce que**
le moyen d'entraînement, de préférence un moteur électrique, est monté avec une roue dentée sur l'extrémité de la broche filetée (26) directement par le biais d'une denture correspondante, le moyen d'entraînement étant monté mobile en pivotement sur un guidage de chariot pour suivre le déplacement en hauteur de la de la broche filetée (26).

8. Dispositif de réglage (2) selon la revendication 4, **caractérisé en ce que** le premier point de pivotement (25) des seconds éléments en ciseaux supérieurs (22) est composé d'une douille (54), qui est rotative, reliée à la platine (4) et disposée sur un axe de rotation (53), lequel relie les deux points de pivotement supérieurs (25) des éléments en ciseaux (22) adjacents, au moins une douille (54) d'une ferrure en ciseaux étant montée en outre de manière mobile sur l'axe de rotation (53).

9. Dispositif de réglage (2) selon une des revendications 4 ou 8,
**caractérisé en ce que**
le premier point de pivotement (23) des premiers éléments en ciseaux inférieurs (21) est déterminé respectivement par l'intermédiaire d'un axe de rotation (41, 42), les axes de rotation (41, 42) étant montés dans une partie de cadre et reçoivent des éléments de denture mobiles en rotation, par exemple les roues dentées (50, 51), qui sont reliées aux premiers éléments en ciseaux (21).

10. Dispositif de réglage (2) selon une des revendications 1 à 9, **caractérisé en ce que**
la plaque de montage (3) peut être reliée à un châssis d'un véhicule (1) et **en ce que**,
sur la platine (4), une surface de siège (13) avec un dossier (14) peut être fixée ou forme la surface de siège, et/ou **en ce que**
le moyen de levage (5) présente en construction à plat une hauteur inférieure à 12 cm dans une position rentrée et est intégré au moins en partie dans un châssis en forme de caisse.

11. Dispositif de réglage (2) selon une des revendications 1 à 10, **caractérisé en ce que**,
par le biais des serrures en ciseaux (20) le long des bords latéraux longitudinaux, la platine (4) peut être relevée, ce qui permet un basculement latéral ou un relevage de la platine (4), ou **en ce que**,
par le biais des serrures en ciseaux (20), la platine (4) peut être relevée dans les zones d'angle, ce qui permet d'abaisser ou de relever la platine (4) dans une position presque horizontale et, en outre, d'effectuer une inclinaison latérale, un basculement vers l'arrière et vers l'avant ou un transfert en diagonal de la platine (4).

12. Dispositif de réglage (2) selon une ou plusieurs des revendications 1 à 11, **caractérisé en ce que**
la plaque de montage (3) est reliée à au moins un rail (74, 75) et le rail (74, 75) est monté dans une unité d'entraînement linéaire (72, 73), l'unité d'entraînement linéaire (72, 73) étant solidaire du châssis (6) du véhicule, et le rail (74, 75) pouvant être déplacé par rapport au châssis (6) du véhicule par le biais d'une crémaillère, d'une courroie, d'une broche ou d'un moteur linéaire.

13. Dispositif de réglage (2) selon une ou plusieurs des revendications 1 à 12, **caractérisé en ce que**
le déplacement des éléments en ciseaux inférieurs (21) est limité par le biais d'un contacteur de fin de course, et/ou **en ce que** le déplacement des éléments en ciseaux inférieurs (21) peut être saisi par le biais d'un élément denté et d'un capteur angulaire, l'élément denté venant s'engrener avec l'élément de denture du premier point de pivotement, et/ou **en ce que** le déplacement des éléments en ciseaux inférieurs (21) peut être surveillé au-dessus de la rotation de la broche filetée (26) à l'aide d'un transmetteur de vitesse.

14. Dispositif de réglage (2) selon une ou plusieurs des revendications 1 à 13, **caractérisé en ce que**
la plaque de montage (3) est équipée d'au moins un tampon en caoutchouc, de préférence de quatre tampons en caoutchouc, sur lesquels la platine (4) vient se placer dans la position inférieure, et/ou **en ce que** la plaque de montage (3) et la platine (4) sont chacune munies d'un capteur gyroscopique (77), lesquels sont couplés à une unité de commande (76) du moyen d'entraînement.
